# EUROPEAN PATENT SPECIFICATION

(11) **EP 1 590 272 B1**
(45) Date of publication and mention of the grant of the patent: **18.08.2010**
(21) Application number: 04702195.1
(22) Date of filing: 14.01.2004
(51) Int. Cl.: B65G 1/137, G06Q 10/00, G05D 1/02

(54) **MATERIAL HANDLING SYSTEM AND METHOD USING AUTONOMOUS MOBILE DRIVE UNITS AND MOVABLE INVENTORY TRAYS**
MATERIALHANDHABUNGSSYSTEM UND VERFAHREN MIT SELBSTÄNDIGEN MOBILEN ANTRIEBSEINHEITEN UND BEWEGLICHEN LAGERBEHÄLTERN
SYSTEME DE MANIPULATION DE MATERIAUX ET PROCEDES D'UTILISATION D'UNITES D'ENTRAINEMENT MOBILES AUTONOMES ET DE PLATEAUX D'INVENTAIRE MOBILES

(30) Priority: 03.02.2003 US 357623; 03.02.2003 US 357853
(43) Date of publication of application: 02.11.2005
(73) Proprietor: Kiva Systems, Inc., Burlington, MA 01803 (US)
(72) Inventor: MOUNTZ, Michael, C., Cambridge, Massachusetts 02138 (US)
(74) Representative: Lawrence, John
(86) International application number: PCT/US2004/000971
(87) International publication number: WO 2004/069699

(56) References cited:
- EP-A- 0 458 722
- EP-A- 1 251 083
- US-A- 4 669 047

## Description

### FIELD OF THE INVENTION

The present invention relates generally to the field of material handling; more particularly, to systems and methods of material handling using autonomous mobile drive units and movable inventory trays.

### BACKGROUND

The order fulfillment step in the distribution system process is often one of the largest cost components in moving inventory from production to end consumer. This is due to the fact that final order assembly is typically labor intensive and time consuming as operators move among inventory locations and manually handle items. The order fulfillment step involves selecting multiple individual inventory items from among a large assortment of possible items. In contrast, the steps prior to the order fulfillment step in the distribution system process are generally more efficient since they handle inventory in bulk operations such as moving a truckload at a time, a full pallet of one product, or even whole cases.

Due to its large labor costs, order fulfillment operations have long been the focus of innovations designed to reduce labor. These developments have taken the form of pick-to-light technology, wireless barcode readers, conveyor systems that move orders to operators and even automated storage and retrieval systems ("ASRS") that bring the inventory to the worker. Common ASRS solutions are sometimes called carousels or stockers. A typical carousel may have several thousand storage bins installed in a rotating structure that operates similar to the spinning clothes rack at a dry cleaning facility. Another type of solution known as a sorter is used in conjunction with inventory storage equipment and comprises a revolving tray mechanism that helps sort items coming from inventory into their target order bins. Yet another solution is to provide fixed racking aisles served by a gantry robot that moves in and out of the aisles to bring inventory to the front of the storage system.

These solutions have been embraced by the distribution industry for their ability to streamline operations and cut operating costs. Yet even with these often expensive systems, fulfillment costs remain high and distribution system managers continue to search for ways to reduce operating costs.

Another major shortcoming of the current set of order fulfillment solutions is complexity. These automated systems often involve complex control software, lengthy installation, integration and bring-up time, and fail to perform robustly over long periods. Current solutions must be monitored, tuned, and managed by expects with sophisticated knowledge of the system's workings. In addition, these systems are often inflexible to new processes that may be required as an organization's needs change.

What is needed is an order fulfillment system that is simple to install, operate, and maintain, and that would further reduce operating costs.

EP 1 251 083 discloses an automated system for handling palletized merchandise. The system makes it possible to fully automate handling operations of palletized merchandise in factories and distribution centers.

US 4 669 047 discloses an automated parts supply system for an manufacturing operation to deliver parts to industrial work stations on a "just in time" basis.

EP 0 458 722 discloses a system and apparatus for handling and moving boxes, containers or the like from one place to another in a factory or a warehouse following instructions from a computer.

According to one aspect of the invention there is provided a system according to claim 1.

According to another aspect of the invention there is provided a method according to claim 23.

Acording to a further aspect of the invention there is provided a computer readable medium according to claim 36.

### BRIEF DESCRIPTION OF THE DRAWINGS

The present invention will be understood more fully from the detailed description that follows and from the accompanying drawings, which however, should not be taken to limit the invention to the specific embodiments shown, but are for explanation and understanding only.

**Figure 1** is a top perspective view of a mobile inventory tray

**Figure 2A** is a bottom perspective view of a mobile inventory tray

**Figure 2B** is a front side view of the mobile inventory tray of Figure 2A.

**Figure 3** is a high-level system block diagram of tray subsystems

**Figure 4A** is a block diagram of a system interface to a warehouse management system

**Figure 4B** is a flow chart showing the steps of an order fulfillment process using mobile inventory trays.

**Figure 5** is a top view of mobile inventory trays located on a factory floor

**Figure 6** is a perspective view of mobile inventory trays located on a factory floor.

**Figure 7** is a perspective view of mobile inventory trays populating multiple vertical floor levels within a factory space.

**Figure 8** is a perspective view of mobile inventory trays on a factory floor showing openings in the floor enclosure.

**Figure 9A-9C** are a side view and first and second perspective views of movable inventory trays and detachable mobile drive units according to one embodiment of the present invention.

**Figure 10** is a top view showing movable inventory trays arranged in a cellular grid with support lanes and queue locations on a factory floor according to one embodiment of the present invention.

**Figure 11** is a three-part movable inventory tray including a base tray, a stack tray, and a mobile drive unit according to one embodiment of the present invention.

**Figure 12** is a mobile drive unit docked to a base tray according to one embodiment of the present invention.

**Figure 13** is a flow chart illustrating a mobile drive unit selection process to fill an order request according to one embodiment of the present invention.

**Figure 14** is a flow chart illustrating an order fill process using autonomous mobile drive units and movable inventory trays according to one embodiment of the present invention.

**Figure 15** is a flow chart illustrating an inventory replenishment process using autonomous mobile drive units and movable inventory trays according to one embodiment of the present invention.

### DETAINED DESCRIPTION

A material handling system and method using mobile autonomous inventory trays and peer-to-peer communications is disclosed. In the following description numerous specific details are set forth, such as the particular configuration of mobile inventory trays, the use of mobile inventory trays on a factory floor, and details regarding communication technologies, etc., in order to provide a thorough understanding of the present invention. However, persons having ordinary skill in the material handling arts will appreciate that these specific details may not be needed to practice the present invention.

Autonomous mobile inventory trays, which are robotic devices, may be used to extend the concept of bringing a storage location to an operator (e.g., person, robot, etc.). Inventory is stored in mobile trays that can move in any direction under their own power within an established storage area of an organization (e.g., a factory floor). There are no predetermined storage locations for the mobile inventory trays other than that they exist somewhere within a designated space (e.g., an enclosed factory floor). The mobile inventory trays are free to move in any direction necessary including up and down ramps to other inventory floor levels. In this manner, the mobile inventory trays can respond to pick requests and move to pack station locations as part of the pick-and-pack order filling process. The mobile inventory trays may communicate with each other via radio frequency ("RF") technology (e.g., the *Bluetooth wireless* protocol link) or other types of peer-to-peer communication. The mobile inventory trays may use a pseudolite indoor global positioning system ("GPS") to provide themselves with an accurate position of their location within the predefined inventory storage area. Alternate positioning technologies may also be used such as 802.11-based localization technology or Ultra Wide Band (UWB) signaling based location technology. The mobile inventory trays may then use this information to calculate routes to a pack station, and their peer-to-peer communications ability to coordinate clear paths on the factory floor, or to queue with other trays at control nodes.

The mobile inventory trays are thus automatic unguided vehicles (an "AUV") rather than automatic guided vehicle (an "AGV"). They are able to navigate the factory floor autonomously using information obtained from the on-board GPS and RF communication systems without any guidance assistance from a remote central computer. This system of mobile inventory trays is self-tuning and self-optimizing. Frequently requested trays migrate closer to the pack stations, while trays containing slower moving inventory items drift back and to the sides and may even move to upper levels. In this sense, the material handling system and method of the present invention is a complex adaptive system and demonstrates emergent system behavior.

As with all material handling systems, the autonomous storage and retrieval system and method may integrate with existing warehouse management software ("WMS") systems. For example, order requests may be made from a WMS to the material handling system ("MHS") and relayed to the appropriate pack station computers which then direct the order fulfillment from inventory brought to the pack stations utilizing the mobile inventory trays. Orders may be processed in parallel, i.e., multiple orders may be filled simultaneously at a given pack station and multiple pack stations can operate concurrently. Parallel processing of orders allows for real-time fulfillment of orders, in that multiple orders may be filled in minutes rather than in hours. Operators pick the inventory items from the arriving trays, place the items in the order container and, when the order is complete, the pack station computer relays this information to the MHS which in turn notifies the WMS.

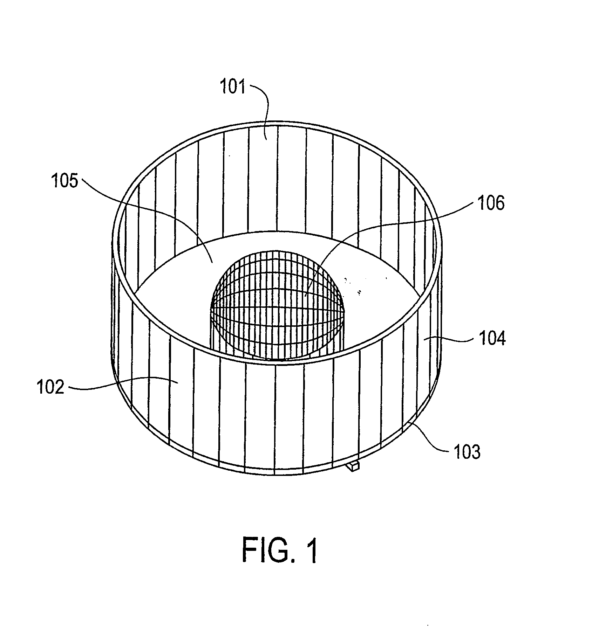

Referring now to Figure 1 there is shown a perspective view of a mobile inventory tray 101. Mobile inventory tray 101 is designed so that it may move autonomously on a surface, such as a factory floor (not shown in this view). Although mobile inventory tray 101 may be specifically discussed in reference to its movement on a factory floor, it should be noted that mobile inventory tray 101 may be used in a variety of capacities including those typified by pick-and-pack operations, order fulfillment operations, or assembly line operations where a few items are drawn from a large population of possible items. An example of such an operation is where a single item is drawn from a large population of books, movies, food supplies, subsystem parts, etc.

Mobile inventory tray 101 comprises an enclosure 102 to contain various inventory items (not show in this view). In Figure 1, the enclosure is a circular, one-piece assembly container having a base or bottom wall 103 and a side wall 104 extending upwardly from the bottom wall 103 to create a compartment 105 for the inventory items. It should be noted that the mobile Inventory tray does not necessarily need to be circular, as is shown in Figure 1. The design of the mobile inventory tray 101 may vary in size and shape based on the type of inventory Items the factory stores. Mobile inventory tray 101 also contains a housing 106 for its drive system and control electronics which will be described in more detail later.

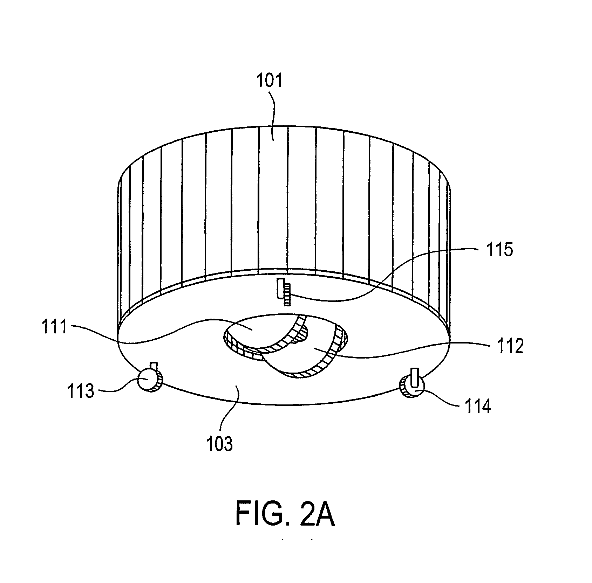

Referring now to Figure 2A there is shown a bottom perspective view of a mobile inventory tray 101. Two driving wheels 111 and 112 and three small freely-rotating casters 113 - 115 are shown mounted to the base 103 of the mobile inventory tray 101. The driving wheels 111 and 112 are operated by motors (not shown in this view) located in the housing 106 of mobile inventory tray 101. The drive wheels 111 and 112 always remain in contact with the factory floor. Casters 113-115 function to support the load and maintain mobile inventory tray 101 in rolling contact with the floor despite imbalances in the items contained in enclosure 102. The motors may be attached to the driving wheels 111 and 112 in a conventional manner.

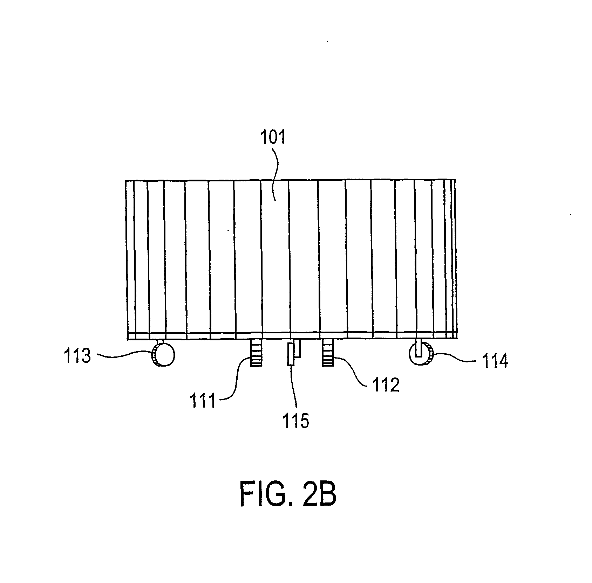

Figure 2B is a front side view of the mobile inventory tray of Figure 2A. Casters 113 - 115 roll freely and balance the mobile inventory tray 101 as it moves along a surface (not shown in this view) by using the driving wheels 111 and 112. It should be noted that the mobile inventory tray 101 may use other locomotion means as well, including motor driven track, propellers, ball-wheels or a combination of locomotion devices.

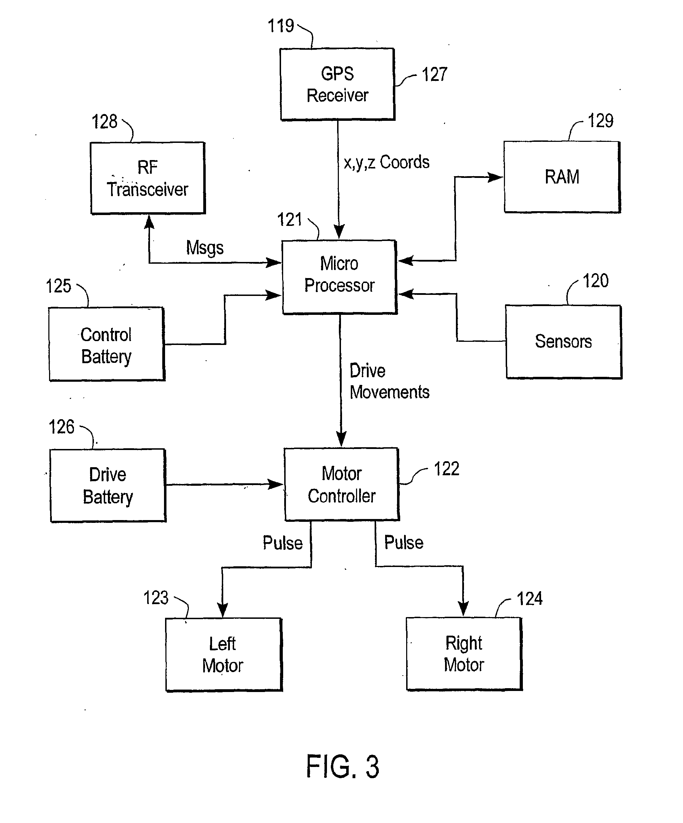

Figure 3 is a high-level block diagram of the subsystems of a mobile inventory tray. The mobile inventory tray subsystem may be implemented as a computer-based (i.e., microprocessor-based) device. For instance, all of the elements shown in Figure 3 may be contained within housing 106 (see Fig. 1) secured to the mobile inventory tray.

A motor controller 122 controls the movement of the mobile-inventory tray In response to drive movement commands received from microprocessor 121. Motor controller 122 is coupled to provide pulse signals to a left motor 123 and a right motor 124. The motors 123 and 124 are coupled to the drives wheels (see Fig. 1) which propel the mobile inventory tray forward and backward in response to the signals provided by controller 122. A control battery 125 and a drive battery 126 provide the electrical power for operating the electrical systems 122 and drive motors 123 and 124. The mobile inventory tray may move to and couple with charging stations (not shown) as needed to replenish the battery power.

Microprocessor 121 of the mobile inventory tray subsystem 119 provides the intelligence for the mobile inventory tray. A random-access ("RAM") 129 memory may be included to provide memory storage and as a source of data. A global positioning system ("GPS) receiver 127 , radio frequency ("RF") communication transceiver 128, and sensors 120 provide signals to microprocessor 121. For example, GPS receiver 127 outputs position coordinates (x, y, z), while transceiver 128 provides command and other messages, and sensors 120 provide signals to microprocessor 121. Sensors may include infrared, optical, acoustic, contact, laser, sonar, magnetic, etc. common to mobile robotic vehicles for the purpose of identifying obstacles, avoiding collisions, finding edge limits etc. Microprocessor 121 may also send information (e.g., location, status, diagnostics, etc.) to a remote receiver utilizing transceiver 128.

As the mobile inventory tray moves about the factory floor it may provide itself with an accurate position of its location at all times using the GPS receiver 127. The GPS receiver 127 or equivalent system receives signals for determination of its position coordinates. This position information may include geographic longitude and latitude, as well as the height above normal zero or cartesian coordinates in a manner that is commonly known. Those skilled in the art will appreciate that other guidance methods and systems including radar-based inertial navigation using gyroscopes, laser triangulation, cell-based locator logic (e.g., such as the emergency 911 positioning technology), and visual referencing may also be used by the mobile inventory tray to determine its position coordinates. The mobile inventory tray utilizes the position coordinates obtained from the GPS receiver 127 to calculate routes on the factory floor. It may also utilize position information when navigating to clear paths or queue with other mobile inventory trays, as will be described in detail shortly.

The mobile inventory tray may communicate its position and other data (e.g., the content of its inventory, its destination pack station, etc.) in a peer-to-peer fashion to other mobile inventory trays using RF communication as provided through receiver 128. In the embodiment illustrated by Figure 3, a short-range communications medium such as a *Bluetooth* wireless protocol link or an ordinary infrared communication link may be used to provide a direct wireless link between mobile inventory trays. It should be understood that various wireless and terrestrial communications technologies may be employed. For example, the mobile inventory tray may be equipped with a device for communicating using the Global System for Mobile Communications ("GSM") protocol, the General Packet Radio Service ("GPRS") protocol, the 802.11b Wi-Fi networking protocol, and/or any other communication protocol/standard capable of communicating data. In a two-way mode of operation, transceiver 128 is equipped with an interface for both receiving and transmitting data over the direct wireless link. The wireless link may also communicate with the material handling system ("MHS") (not shown in this view) which interfaces with the individual mobile inventory trays. In this manner, the mobile inventory trays may be directed to various check-in stations and/or pack stations to process orders requested by the MHS. The mobile inventory tray may use the RF communication system provided by transceiver 128 and the GPS. receiver 127 to navigate to appropriate check-in stations and/or pack stations.

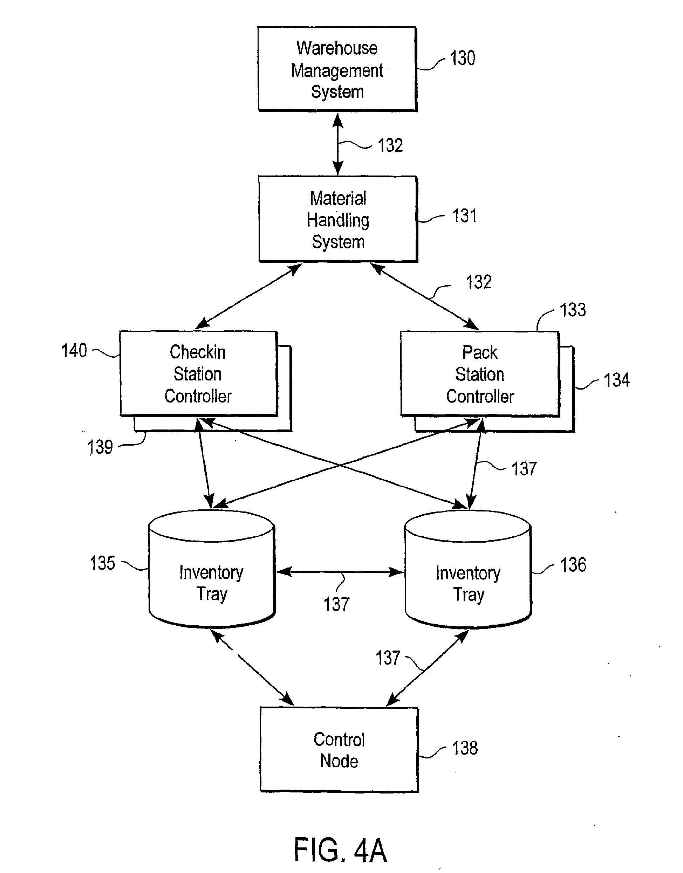

Referring now to Figure 4A there is shown a block diagram of a system interface to a WMS 130. The WMS 130 comprises a host computer that communicates data such as a production order (i.e., a request for an item(s) of inventory) to a Materials Handling System ("MHS") 131. The WMS 130 may be implemented as any one of a number of well known systems used to manage inventory in a factory or warehouse. WMS 130 transmits orders for shipments, tracks receipts, monitors factory inventory, etc. The WMS 130 transmits the request for the item(s) of inventory to the MHS 131 through a network connection, such as an intranet network 132, It should be noted that a variety of wireless and/or terrestrial communications technologies may also be used to transmit this request, including a wide area network ("WAN"), a local area network ("LAN"), or any other system of interconnections enabling two or more computers to exchange information. The MHS 131 then transmits the data using the above network connection methods to one or more pack station controllers 133, 134, etc. In turn, the pack station controller 133,134, etc., wirelessly transmits the data request for the item(s) of inventory to one or more of the mobile inventory trays 135, 136 via a communication device in the pack station controller 133, 134, etc., using an RF link 137.

There may be multiple mobile inventory trays 135, 136, etc., moving about on a factory floor, with each mobile inventory tray 135, 136, etc., carrying a particular item(s) of inventory. Note, that in certain implementations, it is also possible for a single mobile inventory tray to carry multiple different types of inventory items in order to reduce the overall number of trays needed in the system. When the request for an item(s) of inventory is received by one or more mobile inventory trays 135, 136, etc., the mobile inventory trays transmit the request to peer mobile inventory trays 135, 136, etc. using the RF link 137. In a matter of seconds (or in a smaller increment of time), every mobile inventory tray 135, 136, etc., has received the request. Mobile inventory trays 135,136, etc., containing the requested items(s) of inventory are instructed by their microprocessor 121 (see Fig. 3) to move to the pack station controller 133, 134, etc., all the while locating themselves.on the factory floor with their GPS (not shown in this view). During movement, the mobile inventory trays 135, 136, etc. may also communicate with other control nodes 138 such as charging stations, obstacle markers, ramp markers, etc. using the RF link 137. When mobile inventory trays 135, 136, etc., arrive at the pack station controller 133, 134, etc., an operator (e.g., a human, a robot, etc.) removes the requested inventory item(s) from the mobile inventory trays 135, 136, etc. Pack station controller 133,134, etc., tracks inventory item(s) requests as they are satisfied. This tracking function may be performed by scanning a barcode affixed to the inventory item(s). Pack station controller 133, 134, etc., communicates with the microprocessor 121 on mobile inventory trays 135, 136, etc., so that once an order is satisfied (e.g., requested item(s) is removed from the mobile inventory trays 135, 136, etc., and scanned by the barcode scanner) the mobile inventory trays 135, 136, etc., are released so that they may again move about the factory floor to fill other orders. The pack station controller 133,134, etc., may also communication with the MHS 131 via the intranet network 132 or via some other wireless and/or terrestrial link, which in turn communicates with the WMS so that it may also track when order requests have been satisfied.

tt should be noted that each mobile inventory tray 135, 136, etc., receives a supply of a particular item(s) of inventory at one or more check-in station(s) 139, 140, etc., where pallets may arrive from vendors on a regular basis. An operator at the check-in station 139, 140 etc. removes items of inventory from the pallets and places the items in the mobile inventory tray 135, 136, etc. For example, mobile inventory tray 135 may carry tubes of toothpaste while mobile inventory tray 136 may carry cartons of milk. Mobile inventory trays 135,136, etc. known to move themselves to a check-in station 139, 140, etc. to replenish their inventory item(s) as they are depleted. When depleted, the empty mobile inventory tray may take on any new inventory item as determined by the operator at the check-in station. Mobile inventory trays 135, 136, etc., may also receive requests from the MHS 131 to move to check-in station 139, 140, etc. as more pallets arrive.

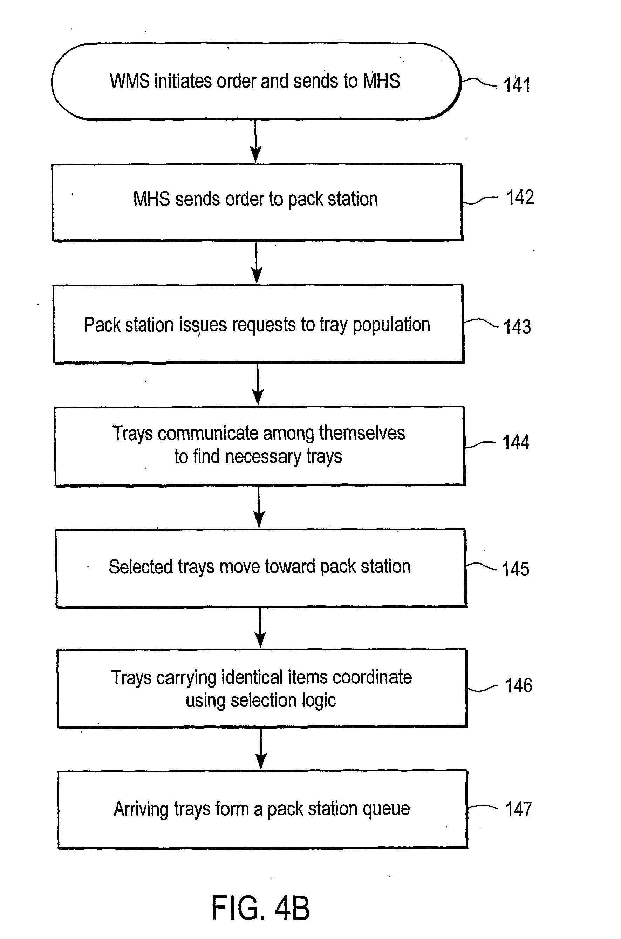

Another solution provides for giving inventory certain intelligence. According to this solution, as depicted by Figure 4B, not only can the pack station controller 143 communicate with the inventory, the inventory can also essentially communicate with other inventory via mobile inventory trays. Figure 4B is a flow chart showing the steps of an order fulfillment process using mobile inventory trays interfacing with each other and with the material handling system of Figure 4A. In one solution, an order (e.g., for bread and milk) is transmitted from the WMS 141 to the MHS. The MHS 142 then relays this order to a pack station controller. The pack station controller 143 transmits the order to mobile inventory trays using an RF link. The mobile inventory trays then communicate among themselves to locate the trays that contain the requested inventory items 144. When a tray does not contain a requested item it relays the request to: peer trays. (e.g., "I do not have bread, but does anyone else have bread?"). The system relays the request all the way across the factory floor in this fashion. In a matter of seconds, every mobile inventory tray that contains requested items begins moving toward the pack station controller 145. As mobile inventory trays containing requested items move toward the pack station, other mobile inventory trays which are not part of this order coordinate to move aside. If two mobile inventory trays attempting to fill the same item request come within a short range of each other (e.g., 30 feet), they may communicate to determine who should fill the order 146. One mobile inventory tray may state that it has two loaves of bread, and another mobile inventory tray may state that it has five loaves. Then according to embedded tray selection algorithms, one tray moves aside and the other tray continues to move toward the pack station, because it is the optimum mobile inventory tray to fill the order. In this manner, the system is not only self-regulating but also self-optimizing in that item(s) of inventory that are requested more often drift closer to the pack station for more rapid response on subsequent order requests. As mobile inventory trays arrive at pack station, they communicate with each other to form an orderly queue 147 so that an operator can remove the requested items.

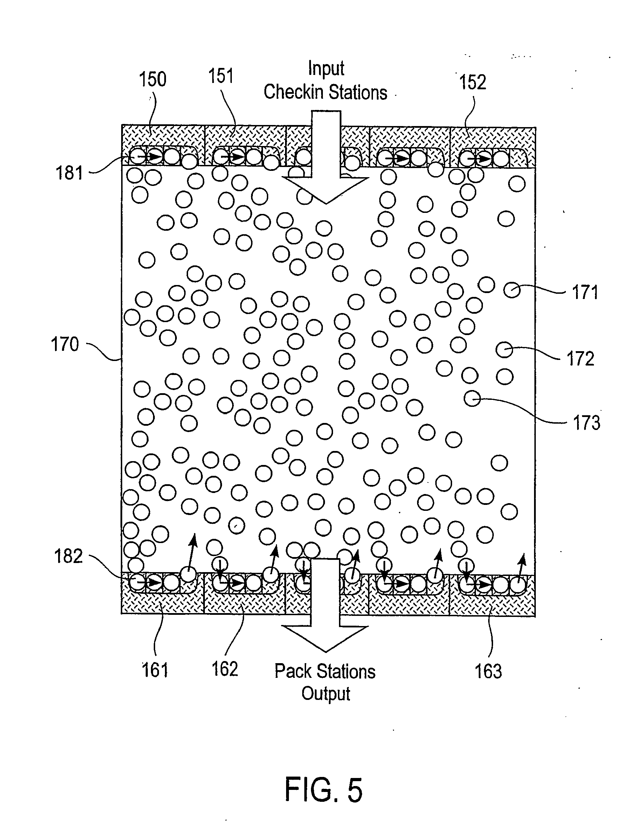

Referring now to Figure 5 there is shown a top view of multiple mobile inventory trays located on a factory floor . According to the solution illustrated by Figure 5, check-in stations 150, 151, 152, etc., and pack stations 161, 162, 163, etc., are located on opposite sides of a factory floor 170. It should be noted that the configuration of the factory floor 170 and the location of the check-in stations 150, 151, 152, etc., and the pack stations 161, 162, 163, etc., in relation to the factory floor 170 may change depending on a variety of considerations (e.g., size and quantity of the inventory item(s) processed, types of inventory item(s), size of the factory floor, etc.). Mobile inventory trays 171, 172, 173, etc., are free to move about the factory floor 170 in any direction using the propulsion means disclosed above (see Figs. 1 and 2). The mobile inventory trays 171, 172, 173, etc.; may be directed to various check-in stations 150, 151, 152; etc., and/or pack stations 161, 162, 163, etc., to fill orders requests, by the MHS (not shown in this view). The mobile inventory trays 171, 172, 173, etc., form orderly queues as they enter the input areas 181, 182 of the check-in stations 150, 151, 152, etc., and/or pack stations 161, 162, 163, etc. Operators (not shown in this view) move inventory item(s) (not shown in this view) into and out of the mobile inventory trays 171, 172, 173, etc., as the mobile inventory trays move through the check-in 150, 151, 152, etc. and pack stations 161, 162, 163, etc.

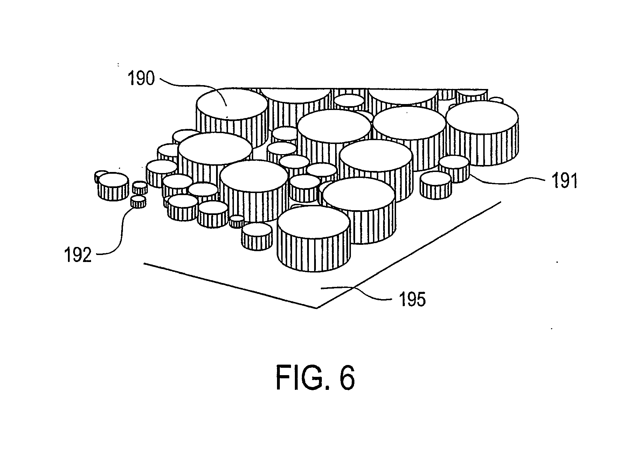

Referring now to Figure 6 there.is shown a perspective view of multiple mobile inventory trays located on a factory floor. The mobile inventory trays 190, 191, 192, etc., may be of varying sizes and shapes, As shown in Figure 6, the mobile inventory trays 190, 191, 192, etc., are circular and vary in size and shape. Mobile inventory trays 190, 191, 192, etc., may also be customized to transport specialty items (e.g., Items that require special care). There are no predetermined storage locations for the mobile inventory trays 190, 191, 192, etc., other, than that they exist somewhere within the designated inventory storage, area on a factory floor 195. This is due to the fact that the mobile inventory trays 190, 191, 192, etc., are "smart" trays. They direct themselves wherever they need to be on the factory floor 195. As described herein, the location of the mobile inventory trays 190, 191, 192, etc., is not tracked, assigned, or controlled, until they are directed to a pack station or a check-in station (not shown in this view). In this sense, the material handling system and method of the present invention provides for a location-less inventory storage and retrieval system.

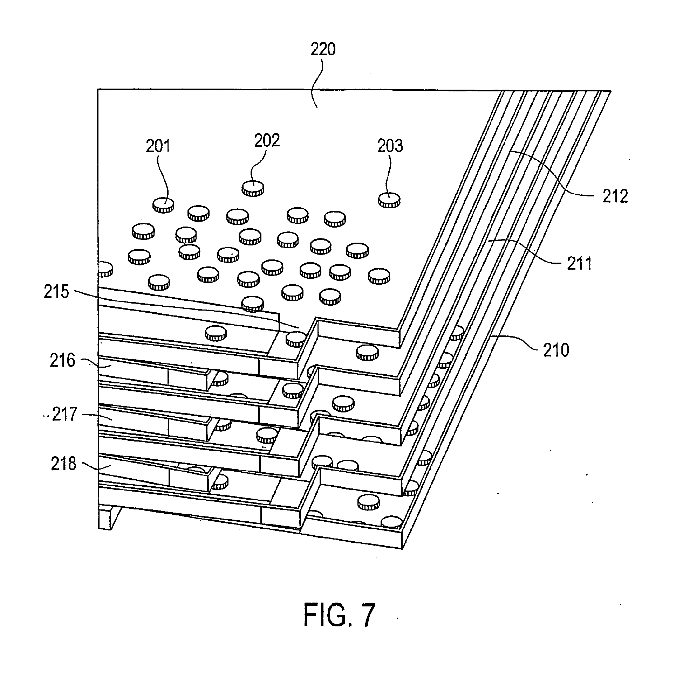

Referring now to Figure 7 there is shown is a perspective view of mobile inventory trays populating multiple vertical floor levels within a factory space . Mobile inventory trays 201. 202, 203, etc., are located and free to move about on all vertical floor levels 210, 211, 212, etc., within the factory space of a multi-floor inventory storage area 220. Floor enclosure opening 215 and ramp access 216, 217, 218, etc., is provided on every vertical floor level 210, 211, 212, so that the mobile inventory trays 201, 202, 203, etc. may move freely from floor to floor. Check-in stations and pack stations (not shown in this view) may be located on one floor level 210 or every floor level 211, 212, etc., depending on the configuration of the facility

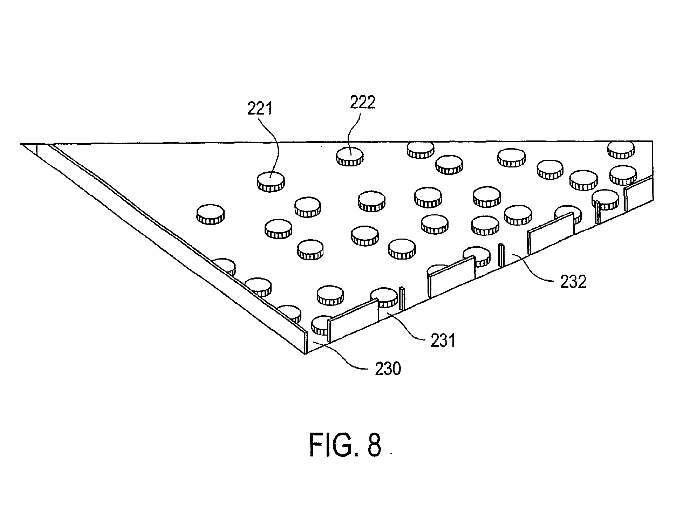

Referring now to Figure 8 there is shown a perspective view of mobile inventory trays on a factory floor showing openings in the floor enclosure. In the solution illustrated by Figure 8, mobile inventory trays 221, 222, etc., move through floor enclosure openings 230, 231, 232, etc. to gain access to pack stations, check-in stations etc. Ramps may be provided (see Fig. 7) for the mobile inventory trays 221, 222, etc., to move in any direction necessary including up and down the ramps to other inventory floor levels. In this way, mobile inventory trays 221, 222, etc., can respond to pick requests and move to pack station locations (not shown in this view) to fill orders. The mobile inventory trays may also move to other inventory floor levels using other types of mechanisms as well (e.g., elevators).

There are several different solutions by which mobile autonomous inventory trays can be used to facilitate inventory management, Two such solutions embodiment are described as fixed drive units and detachable drive units. In the detachable drive unit embodiment of the present invention, the drive mechanism is a detachable unit described as a mobile drive unit that can dock and undock with movable inventory trays as needed to carry out inventory movement requests. The movable inventory trays remain motionless until such time as a mobile drive unit docks with a movable inventory tray and moves it through the inventory pictking process and releases it into a storage location. The mobile drive units may place the movable inventory trays down in an organized virtual layout such that other mobile drive units can locate the trays. Movable inventory trays may be stacked to form inventory pods that are moved by the mobile drive units. Another characteristic of the detachable drive unit embodiment is that mobile drive units may send and receive instruction messages in a broadcast fashion over a typical wireless network and may still communicate in a peer-to-peer fashion for such things as collision avoidance.

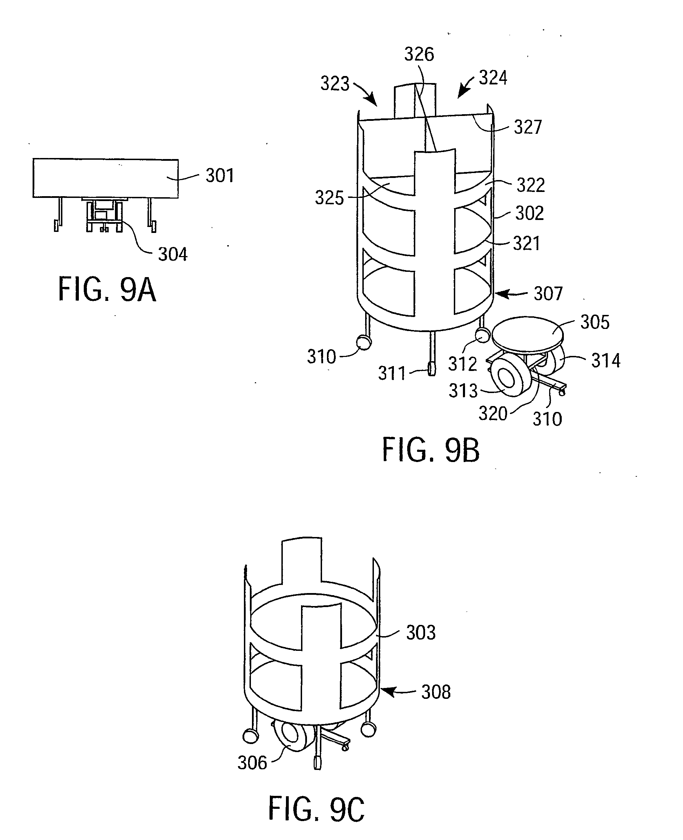

In Figures 1 through 8 herein; the description refers generally to the fixed drive unit embodiment not in accordance with the invention as defined in the claims. Figures 9 through 15 refer generally to the detachable drive unit embodiment in accordance with the invention as defined in the claims.

Referring now to Figures 9A-9C there is shown a side view and first and second perspective views of movable inventory trays and detachable mobile drive units according to one embodiment of the present invention. The movable inventory trays or "pods" 301, 302. and 303 are designed so that they may be moved about on a factory floor or other type of surface by detachable, mobile drive units 304, 305, and 306. The mobile drive units 304, 305, and 306 may use a docking mechanism to dock to base trays 301, 307, and 308 of the movable inventory pods 301, 302, and 303, using a docking mechanism (not shown in this views) located on the bottom of the base trays 301, 307, and 308. Although the embodiments illustrated by Figures 9A-9C show the mobile drive units 304 and 306 docked to the base 301, 307, and 308, a whole variety of docking mechanisms may be employed.

The control units for the mobile drive units 304, 305, and 306 may be contained within a housing 320 secured to the mobile drive units 304, 305, and 306 by conventional means. The control unit may be implemented as a microcontroller-based device, or other electro-mechanical system and may contain the components described in Figure 3 herein. As is described in more detail in Figure 3, the control unit for each mobile drive unit 304, 305, and 306 includes a communication link coupled to a processor and a power unit coupled to a drive mechanism configured to move the mobile drive units about the warehouse in response to control signals of the processor. The mobile drive units 304, 305, and 306, receive command signals via this communication link. For example, the command signals may be transmitted by one or more pack stations (not shown in the view) responsive to an order request issued by the MHS.

The movable inventory pods 301, 302, and 303, are simply stationary units on casters 310, 311, 312, etc., that do not have the drive capability and control electronics necessary to move about on the factory floor without the assistance of the mobile drive units 304, 305, and 306. As in the previous solutions disclosed herein, casters 310, 311, 312, etc., roll freely and balance the movable inventory pods 301, 302, and 303 as they are moved along a floor surface by the driving wheels 313, 314, etc., of the mobile drive units 304, 305, and 306. In other embodiments, casters 310, 311, 312, etc., may be replaced by fixed wheels, roller ball-type bearings or other conventional means for rolling the movable inventory pods across a floor.

The mobile drive units 304, 305, and 306 navigate the factory floor autonomously using information obtained from their on-board GPS and RF communication systems in an exemplary embodiment. The autonomous mobile drive units 304, 305, and 306, integrate with a MHS in the same way that the mobile inventory trays communicate with the MHS, except that the mobile drive units 304, 305, and 306 may contain additional RAM or other storage and computational circuits to perform more extensive calculations and docking procedures.

The movable inventory pods 301, 302, and 303 may be configured as vertically stackable frays, with each stackable tray 321, 322, etc., joined in an interlocked stack to create the pod. The stack height of the stackable trays is limited by the material and structural characteristics of the base trays 301, 307, and 308, operator picking ergonomics and the ability of the mobile drive units 304, 305, and 306 to effectively transport the movable inventory pods 301, 302, and 303 on the factory floor. Each stackable tray 321, 322, etc., may be further sub-divided into bins 323, 324, 325, etc., for the storage of small parts and/or slow-moving products that require only a few units of inventory. The partitions 326, 327, etc., creating the bins 323, 324, 325, etc., may be removable and reconfigurable. In addition, the movable inventory pods 301, 302, and 303 may have molded parts made of plastic or some other suitable material conventionally designed to facilitate positive locating, docking of the mobile drive units 304, 305, and 306, and transfer of force during movement on the factory floor.

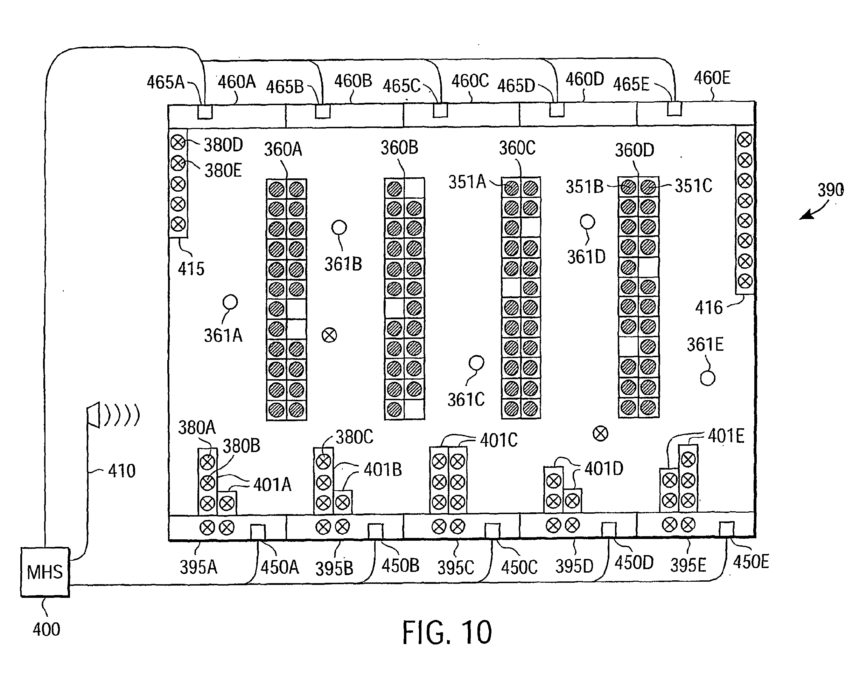

Referring now to Figure 10 there is shown a top view showing movable inventory pods arranged in a virtual cellular grid with support lanes and queue locations on a factory floor according to one optional embodiment of the present invention. The movable inventory pods 351 may be organized in a virtual grid 360 on the factory floor 390 so that they may be easily located by the mobile drive units 361. The position of the movable inventory pods 351 on the factory floor, however, are not typically predetermined or fixed by a system computer/controller. Mobile drive units will typically store pods in the closest available storage grid from their current location without regard to any overall inventory layout plan. At other times, the system controller may direct a mobile drive unit to move a pod to a location farther from the pack stations since it does not get called upon frequently for example. The term "virtual" is used to indicate that the grid is only a mathematical construct and that no markings, guides, or fixed hardware is used on the active factory floor area. There may be many more movable inventory pods 351 than mobile drive units 361 located on a given factory floor. For example, there may be 10,000 movable inventory pods on a factory floor and only 2,000 mobile drive units. This configuration achieves a high inventory storage density while using few mobile drive units. Of course, the ratio of movable inventory pods to mobile drive units may vary depending on the configuration and requirements of the operation.

Movable inventory pods 351 dwell in storage grids 360 on the active factory floor 390. The mobile drive units 361 are located in random locations on the factory floor 390 and may communicate with each other and with the MHS 400 wirelessly about the movable inventory pods 351 they are carrying and about the moves they are making. The mobile drive units 361 may also communicate position coordinates and/or changes in the storage locations of the movable Inventory pods 351 on the factory floor 390 to peer mobile drive units, such that all of the mobile drive units 361 on the factory floor 390 may receive and store the changing coordinates of the movable inventory pods 351. In this way, the mobile drive units 361 keep a mental mapping of the current position of all inventory on the active floor area. In the alternative, the mobile drive units 361 may communicate changes and/or position coordinates of movable inventory pods 351 directly to the MHS 400 via the wireless network 410. The MHS 400 may then, in turn, inform all of the mobile drive units 361 about these changes and/or position coordinates via the wireless network 410 and may store this location information in a central MHS database.

If a movable inventory pod contains an item(s) needed by one of the pack stations 395 a pack station computer 450 chooses an appropriate mobile drive unit to transport the movable inventory pod to the pack station so that an operator may remove the requested item(s) from the movable inventory pod. As multiple orders are processed, mobile drive units docked to movable inventory pods 380 form orderly queues 401 at the pack stations 395 by communicating with each other globally via the wireless network 410 and locally via built-in infrared (IR) type communications. In this manner, movable inventory pods 380 may reorganize such that earlier order requests may move ahead in the queues. The mobile drive units docked to movable inventory pods 380 may rotate to orient the movable inventory pods accordingly to assist operators at the pack stations 395 in locating the correct item(s) of inventory.

Once an item(s) of inventory has been removed from a movable inventory pod and scanned across a barcode scanner attached to the pack station computer 450, the pack station computer notifies that mobile drive unit docked to a movable inventory pod 380 through a wireless communication that it is free to return the movable inventory pod to the closest possible available storage location among the storage grids 360 located on the factory floor 390. In this manner, the item(s) of inventory that are most commonly requested migrate to the front areas of the factory floor 390, maximizing the efficiency of the material handling system.

Mobile drive units docked to empty movable inventory pods 380, or pods containing at least one empty bin, and/or docked to movable inventory pods that may need particular item(s) of inventory to be replenished form orderly queues 415 and 416 along the sides of the factory floor area 390 to await the assignment and loading of new item(s) of inventory at check-in stations 460. Empty movable inventory pods 380 may accept any new item(s) of inventory that the operators at the check-in stations 460 see fit. Empty movable inventory pods 380 are not dedicated to particular item(s) of inventory. An operator at the check-in stations 460 may use a barcode scanner or some other device attached to computers 465 at the check-in stations 460 to scan and identify an item(s) of inventory and to scan the movable inventory pod/bin to make the association as the item is being placed in a movable inventory pod. An operator at the check-in stations 460 may indicate the quantity of the item(s) being placed in the movable inventory pod. The computers 465 at the check-in stations 460 may communicate wirelessly with mobile drive units transporting the movable inventory pods as to when to move into and out of the check-in stations 460 to replenish empty movable inventory pods 380. In addition, once the check-in process is completed, the computers 465 at the check-in stations transmit the type and quantity of units of inventory loaded on to the movable inventory pods 380 and other types of information as needed to the MHS 400 and/or to all of the mobile drive units on the factory floor 390 using the wireless network 410.

Each movable inventory pod 351 may contain an embedded wireless RFID chip or some other form of identification that may be used to uniquely identify that movable inventory pod and the item(s) of inventory contained by the movable inventory pod among the thousands of movable inventory pods 351 on the factory floor 390. When the check-in operation is complete, the check-in station computer 465 may wirelessly notify the mobile drive unit that it is free to move the movable inventory pod back to the storage grids 360 located on the factory floor 390. At this point, the mobile drive units are free to transport the movable inventory pods 380 back to the closest available storage location in the storage grids 360.

The mobile drive units 361 may move movable inventory pods 351 to the check-in stations 460 via a response to a wireless request by the computers 465 at the check-in stations. Alternatively, after the mobile drive units docked to the movable inventory pods 380 at the pack stations 395 have dropped off the item(s) of inventory, they may move immediately to check-in stations 460 if the mobile drive units determine that bins in the movable inventory pods are empty and/or have depleted to a certain predetermined level.

In another arrangement not in accordance with the invention, a centralized computer, such as the MHS 400, may track the position coordinates of the movable inventory pods 380 and the mobile drive units 361 using the wireless network. The MHS 400 may also store information about the particular items of inventory contained in each movable inventory pod in memory, or a central database. For example, the MHS 400 may receive an order request for an item of inventory. Instead of transmitting this request to a pack station computer 450, the MHS 400 may itself use algorithms and software processes to select a particular mobile drive unit 361 to fulfill the order request at a particular pack station 395. The algorithm may instruct the MHS 400 to choose the mobile drive unit 361 to fulfill the order request based on the proximity of a mobile drive unit 361 to a particular movable inventory pod 380 that contains the item of inventory in the order request. Other types of algorithms may be used to determine the mobile drive unit 361 selection processes. It should also be appreciated that the MHS 400 may also select the particular pack station 395 based on an algorithm. The pack station 395 may be selected either before or after the MHS 400 selects the mobile drive unit 361 to fulfill the order.

MHS 400 may transmit the request to the mobile drive unit 361 using the wireless network 410. The mobile drive unit 361 then transports the movable inventory pod 380 to the pack station 395 to fulfill the order request. The mobile drive unit 361 may move under its own direction using its control electronics as previously described herein. Mobile drive unit 361 may still communicate with peer mobile drive units for various purposes. For example, peer-to-peer communication between mobile drive units 361 may be utilized to avoid congestion on the factory floor 390 and/or to effectively navigate into queuing positions 401 at pack.stations 395 and/or check-in stations 460.

Once an item of inventory has been removed from the movable inventory pod 380 at the pack station 395, mobile drive unit 361 may be notified, either by a computer 450 at pack station 395 or by MHS 400, that it is free to return movable inventory pod 380 to a storage location in virtual grid 360 of factory floor 390. MHS 400 may determine an optimum location for movable inventory pod 380 on factory floor 390. For example, MHS 400 may plan and optimize storage by directing the movement of less utilized movable inventory pods 380 to locations farther away from pack stations 395 and check-in stations 460.

MHS 400 may also be used to control and direct requests for the replenishment of items of inventory. These requests may be transmitted wirelessly to MHS 400 from check-in station computers 465 or may come from the WMS (not shown). MHS 400 may determine an appropriate mobile drive unit 361 and movable inventory pod 380 to fulfill the order according to an algorithm or by some other method. Once MHS 400 selects the mobile drive unit 361 to fulfill the order, the mobile drive unit 361 moves an empty movable inventory pod 380 to the appropriate check-in station 460. After the item of inventory has been replenished, mobile drive unit 361 may be instructed by the MHS 400 to return the movable inventory pod 380 back to virtual grid 360 in the manner described herein.

MHS 400 may continually poll the entire population of mobile drive units 361 for position coordinate information using the wireless network. In addition, each mobile drive unit may transmit its position coordinates in regular intervals, for example every minute, to MHS 400 using the wireless network. In this manner, MHS 400 can maintain current location information about mobile drive units 361 and movable inventory pods 380 and may determine the most efficient mobile drive units 361 to fulfill each order request.

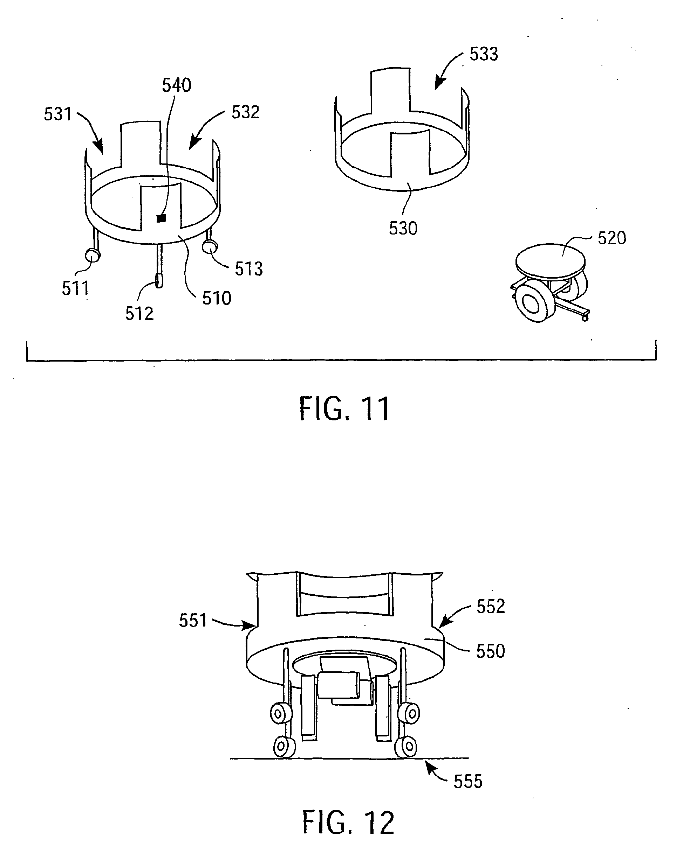

Referring now to Figure 11 there is shown a three-part movable inventory pod including a base tray, a stack tray, and a mobile drive unit according to one embodiment of the present invention. A base tray 510 is used in the first (lowest) position. The base tray 510 includes casters 511-513, and interfaces with the mobile drive unit 520. Base tray 510 may also include an RFID chip 540 embedded in base tray 510. Mobile drive unit 520 docks to base tray 510 to move the movable inventory pod through specific inventory tasks and to release the movable inventory pod back into storage locations. Mobile drive unit 520 interrogates the RFID chip 540 during docking to ensure pick up of the correct movable inventory pod. Moreover, when mobile drive unit 520 is docked to the movable inventory pod, mobile drive unit 520 identifies the orientation of all of the "pickable" openings 531, 532, etc., in the movable inventory pod such that it can align the correct opening 531, 532, etc., toward the operator in the pack stations and/or check-in stations. A stack tray unit 530 is designed to sit on top of base tray 510 and/or other stack trays, thus creating movable inventory pods with multiple stackable trays. The stack trays may also include RFID chips for unique identification by the mobile drive units.

Referring now to Figure 12 there is shown a mobile drive unit docked to a base tray according to one optional embodiment of the present invention. In this particular embodiment, as the movable inventory pod 550 moves along a factory floor 555 it occupies a path three feet wide. The inner diameter of the storage compartment 551 may be slightly smaller than the three-foot outer diameter based on the wall 552 thickness. The storage compartment height of the base tray may be 15 inches. This particular geometry yields a payload capacity of approximately 14,800 cubic inches in this particular embodiment.

The height of the base tray 550 above the factory floor 555 determines the location of the pick openings and thus the reaching and bending of the operators at the pack stations and/or check-in stations. With a floor clearance between 15 and 26 inches above the surface of the factory floor 555, and a pod consisting of 2 or 3 trays, a top pick opening may typically be between 49 and 60 inches. The openings may be 15 inches wide by 11 inches tall. This particular movable inventory pod 550 may accept up to 200 pounds of inventory. Items of inventory may range from very small objects, such as a pack of gum or nail polish, to larger items such as an eight-pack of paper towels or a VCR. Other embodiments may utilize trays in very different configurations, designed for vastly different payloads.

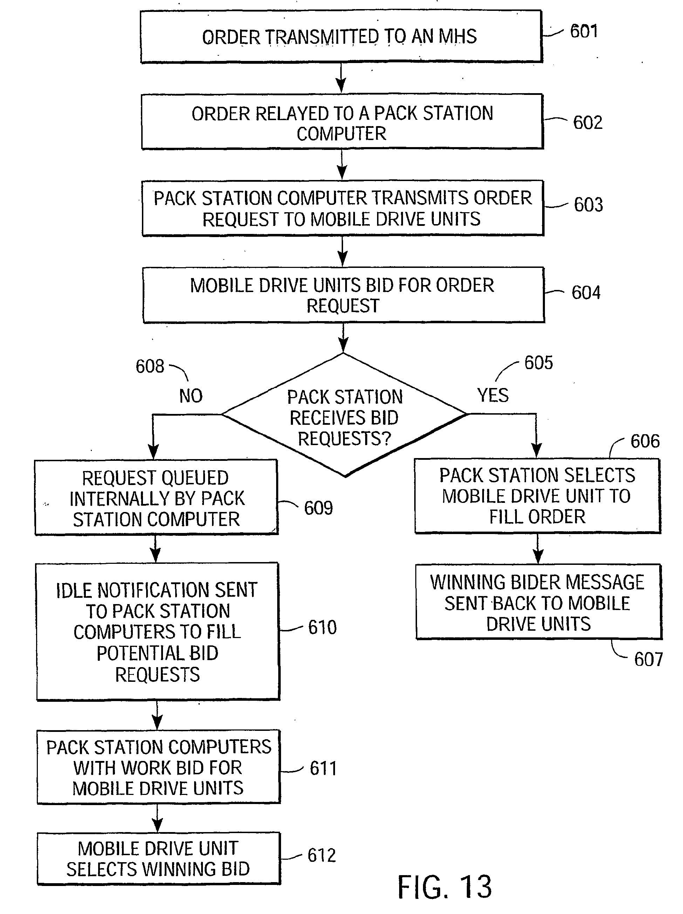

Referring now to Figure 13 there is shown a flow chart illustrating a mobile drive unit selection process to fill an order request according to one embodiment of the present invention. An order is transmitted from a WMS to the MHS (block 601). The MHS then relays the order to a pack station computer (block 602) according to specified load leveling algorithms. The pack station computer transmits the order request for items of inventory to the entire population of mobile drive units located on the factory floor via the wireless network (block 603). The mobile drive units respond to the order request with bids that represent the amount of time each mobile drive unit calculates it would take to deliver the requested item (block 604). If the packs station computer receives bids from one or more mobile drive units (block 605), the pack station computer will fill the request by selecting the mobile drive unit that bids the shortest amount of time (block 606). A winning bidder message is broadcast back to the entire mobile drive unit population by the pack station controller (block 607) such that the losing mobile drive units may delete the open bid and respond to other requests. This process may be handled in an alternative fashion whereby the MHS maintains the status of all mobile drive units and movable inventory pods and centrally calculates and assigns mobile drive unit activities to include which drive is to transport which pod from which location and later, into which location to replace the pod.

If the pack station computer does not receive a bid from one or more mobile drive units (block 608), this means there are no idle mobile drive units available. The pack station computer will then queue the request internally until it hears from an idle mobile drive unit (block 609). When a mobile drive unit becomes idle, it will broadcast that message to the pack station computers in the event that there is an open item request requiring a mobile drive unit.(block 610). All pack station computers that have work bid for the use of the mobile drive unit (block 611). The mobile drive unit selects the winning pack station based on the age of the request (block 612) or by some other selection formula.

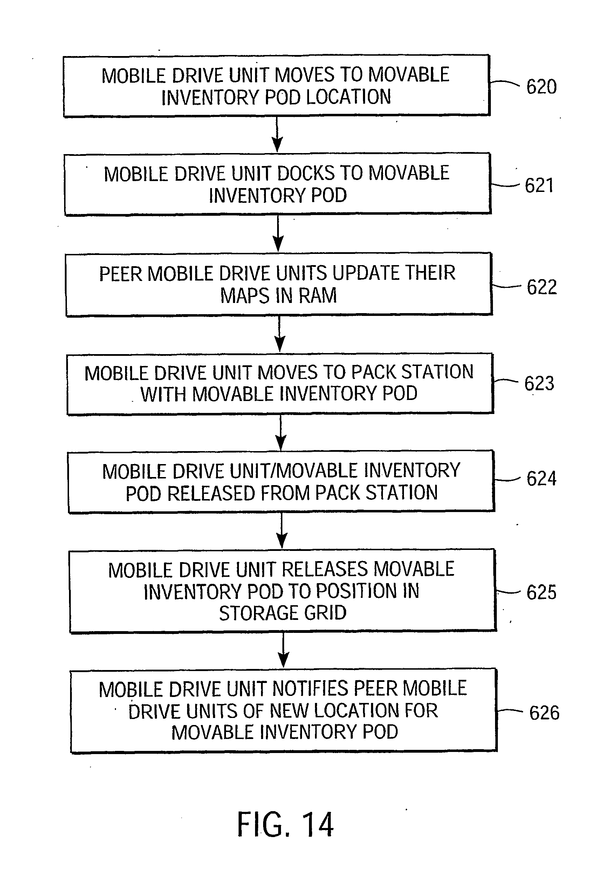

Referring now to Figure 14 there is shown a flow chart illustrating an order fill process using autonomous mobile drive units and movable inventory pods according to one optional embodiment of the present invention. Once a mobile drive unit has been notified that it has been selected by a pack station computer to fill an order request, the mobile drive unit reserves that movable inventory pod with a wireless message to peer drive units and moves to the location of the movable inventory pod containing the requested item(s) of inventory (block 620) and docks with the movable inventory pod (621). The peer mobile drive units update there maps in RAM with this information (block 622) at this point, or earlier when the reservation was made against the movable inventory pod. The mobile drive unit moves to the pack station with the movable inventory pod (block 623). An operator at the pack station removes the item(s) of inventory from the movable inventory pod.

Once the item(s) have been scanned by the operator, the mobile drive unit docked to the movable inventory pod is released from the pack station (block 624). Using its internal map of open storage locations in the storage grid, the mobile drive unit reserves an open storage location with a wireless message to peer mobile drive units, then proceeds to that location and undocks from the movable inventory pod (block 625) and upon completion notifies the peer mobile drive units of the new storage location of the movable inventory pod (block 626).

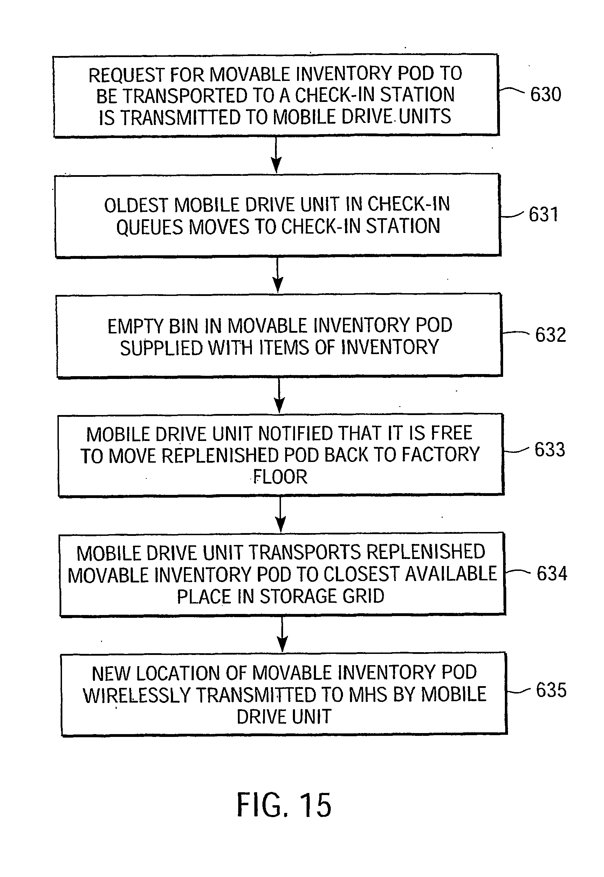

Referring now to Figure 15 there is shown a flow chart illustrating an inventory replenishment process using autonomous mobile drive units and movable inventory pods according to one embodiment of the present invention. A request for a movable inventory pod containing at least one empty bin to be transported to a check-in station is transmitted by a check-in station computer to all of the mobile drive units currently docked to pots containing an empty bin and located in the check-in queue lanes on either side of the factory floor (block 630). The oldest mobile drive unit in the queue lanes responds to the request by moving to the check-in station (block 631). An operator at the check-in station supplies an empty bin in the movable inventory pod with item(s) of inventory (block 632) and the check-in station computer then notifies the mobile drive unit that it is free to move the replenished movable inventory pod back to the factory floor (block 633). The mobile drive unit transports the replenished movable inventory pod to the closest available place in the storage grid on the factory floor (block 634) and wirelessly transmits to the MHS and peer drive units the new location of the movable inventory pod (block 635).

In the foregoing, a material handling system and method using autonomous mobile drive units and movable inventory pods has been disclosed. Although the present invention has been described with reference to specie exemplary embodiments, it should be understood that numerous changes in the disclosed embodiments can be made in accordance with the disclosure herein without departing from the scope of the invention. The preceding description, therefore, is not meant to limit the scope of the invention. Rather, the scope of the invention is to be determined only by the appended claims.

## Claims

1. A system for inventory management in a warehouse, comprising:
one or more mobile drive units MDUs (361), each MDU (361) having a communication link coupled to a processor, a docking mechanism, and a power unit coupled to a drive mechanism configured to move the MDU (361) about the warehouse responsive to control signals of the processor, the MDU (361) receiving command signals via the communication link;
a computer configured to transmit a request signal, the request signal specifying an order for an item of inventory;
a plurality of movable inventory pods MIPs (351), each MIP (351) containing inventory items and being configured for attachment to the docking mechanism of the MDU (361), the MDU (361) docking with a MIP (351) to transport the MIP (351) across the warehouse responsive to the command signals,
**characterised in that**:
each MDU (361) includes a memory storing position coordinates for the plurality of MIPs (351) and a list of inventory items contained in each of the movable inventory pods MIPs (351),
wherein each mobile drive unit MDU (361) is adapted to determine an estimated time duration to transport a movable inventory pod MIP (351) containing an item specified in the order; and transmit the estimated time duration to the computer; and
the computer is arranged to select a particular MDU (361) to fulfil the order based on a shortest estimated time duration and notify the particular MDU (361) that it has been selected to fulfill the order;
the particular MDU (361) arranged to drive to the location of the MIP (351) that contains the particular item of inventory; dock with the MIP (351); and drive the MIP to a station of the warehouse.

2. The system of claim 1 further comprising:
a material handling system MHS (400); and
one or more pack stations (395), wherein the computer is located at one of the pack stations (395), the computer configured to transmit the command signals to the MDUs (361) responsive to an order request issued by the MHS (400).

3. The system of claim 1 wherein the control signals are generated by the processor responsive to command signals received via the communication link.

4. The system of claim 2 wherein the order request is transmitted from the MHS (400) to the computer (450) located at one of the pack stations (395).

5. The system of claim 1 further comprising:
one or more pack stations (395);
a material handling system MHS (400) that transmits the command signals to the MDUs (361), and
wherein the MIP (351) is delivered to a particular pack station (395) responsive to the command signals.

6. The system of claim 2 wherein each MDU (361) transmits the estimated time duration to the computer (450) located at the pack station (395) via a wireless network (410) using an RF system coupled to the communications link of the one or more MDUs (361).

7. The system of claim 1 wherein each of the MDUs (361) contains a guidance system that provides position signals to the processor.

8. The system of claim 7 wherein the guidance system comprises a pseudolite indoor global positioning system GPS.

9. The system of claim 8 wherein the one or more MDUs (361) navigate the factory floor (390) using information provided by the GPS.

10. The system of claim 1 wherein one or more MIPs (351) are configured as vertically stackable trays.

11. The system of claim 10 wherein one or more of the stackable trays comprises a plurality of bins.

12. The system of claim 1 wherein the plurality of movable inventory pods are stored in a virtual grid (360) on a factory floor (390).

13. The system of claim 1 or 2 wherein each of the MDUs (361) contains a global positioning system GPS, each MDU (361) navigating the warehouse autonomously using information provided by the GPS.

14. The system of claim 1 or 2 wherein a radio frequency identification RFID is embedded in each of the MIPs (351) to identify each MIP (351) located on a factory floor (390).

15. The system of claim 2 wherein the command signals are transmitted from the MHS (400) to one or more check-in stations (460) coupled to the MRS (400), the command signals indicating that particular items of inventory need replenishment.

16. The system of claim 15 wherein a check-in station computer (465) selects one of the MDUs (361) to transport a one of the MIPs (351) containing at least one empty bin to a check-in station (460) to replenish items of inventory.

17. The system of claim 1 or 2 wherein the one or more MDUs (361) docked to MIPs (351) containing at least one empty bin form queue lanes along the sides of a factory floor (390) to await inventory replenishment requests from one or more check-in station computers (465).

18. The system of claim 17 wherein the one or more MDU's (361) transport the MIPs (351) to a check-in station (460) to receive items of inventory.

19. The system of claim 1 or 2 wherein the command signals are transmitted to the MDUs (361) via a wireless network (410).

20. The system of claim 1 or 2 further comprising:
a plurality of check-in stations (460), a computer (465) at a check-in station (460) notifying the plurality of MDUs (361) via a wireless network (410) when an empty pod is needed for a replenishment activity.

21. The system of claim 20 wherein a check-in station computer (465) selects a MDU (361) to transport an empty movable inventory pod to a check-in station (460) to replenish items of inventory.

22. The system of claim 1 or 2 wherein each of the MDUs (361) comprises means for communicating information with peer MDUs (361) using a wireless network (410), the information including coordinate information for each of the MDUs (361) and inventory item information stored in particular movable inventory pods.

23. A method for managing items of inventory in a warehouse comprising:
transmitting a request signal from a computer, the request signal specifying an order for an item of inventory;
receiving the request signal by a plurality of mobile drive units MDUs (361), each of the MDUs (361) including a processor coupled to a random access memory RAM,
**characterised by**:
the random access memory RAM that stores position coordinates of a plurality of movable inventory pods MIPs (351) and a list of inventory items contained in each of the MIPs (351), the MDU (361) responding to the request signal by:
determining a location of a movable inventory pod MIP (351) that contains the item of inventory;
determining by each of the MDUs (361) an estimated time duration to transport a MIP (351) containing the item specified in the order; and transmitting by each of the MDUs (361), the estimated time duration to the computer;
selecting by the computer a particular MDU (361) to fulfill the order based on the shortest estimated time duration; notifying the particular MDU (361) that it has been selected to fulfill the order;
driving the particular MDU (361) to the location of the MIP (351) that contains the item of inventory;
docking the particular MDU (361) to the MIP (351);
driving the particular MDU (361) to transport the MIP (351) to a station of the warehouse.

24. The method of claim 23 wherein the station comprises a pack station (395).

25. The method of claim 23 wherein processor is used to calculate movements and process communication messages.

26. The method of claim 23 further comprising:
storing the plurality of MIPs (351) in a virtual grid (360) on a floor (390) of the warehouse;
embedding a radio frequency identification RFID chip in each of the MIPs (351), the RFID chip identifying a unique MIP (351) and the items of inventory contained in each MIP (351).

27. The method of claim 23 wherein the station comprises one of a plurality of pack stations (395).

28. The method of claim 23 wherein the MIPs (351) are configured as vertically stackable trays, each tray containing one or more items of inventory.

29. The method of claim 28 wherein each tray may be subdivided into bins.

30. The method of claim 23 further comprising:
generating position signals by a guidance system of the MDU (361); and navigating a path to the MIP (351) using the position signals.

31. The method of claim 30 further comprising:
navigating a path to the station using the position signals generated by the guidance system.

32. The method of claim 23 further comprising:
removing the item of inventory from the MIP (351) at the station;
moving the MDU (361) to return the MIP (351) to an available storage location;
returning the MIP (351) to an available storage location in the warehouse;
undocking the MDU (361) from the MIP (351).

33. The method of claim 23 further comprising:
moving the MDU (361) to a check-in station (460);
replenishing items of inventory to the MIP (351) at the check-in station (460);
returning the MIP (351) to an available storage location at the warehouse;
undocking the MDU (361) from the MIP (351).

34. The method of claim 23 further comprising communicating information among peer MDUs (361) using a wireless network (410).

35. The method of claim 34 wherein the information includes coordinate information for each of the MDUs (361) and information about inventory items stored in particular MIPs (351).

36. A computer readable medium including code for managing items of inventory in a warehouse, the code operable to:
receive a request signal from a computer specifying an order for an item of inventory at a particular one of a plurality of mobile drive units MDUs (361) located in the warehouse, the particular MDU (361) including a processor coupled to a random access memory RAM
**characterised by**:
the random access memory RAM that stores position coordinates of a plurality of movable inventory pods MIP (351) and a list of inventory items contained in each of the MIPs (351);
the code further operable to:
determine an estimated time duration to transport a movable inventory pod MIP (351) containing an item specified in the order;
transmit to the computer the estimated time duration;
receiving a notification that a particular MDU (361) has been selected from a computer;
determining that the particular MDU (361) is selected to fulfill the order;
drive the particular MDU (361) to the location of the MIP (351) that contains the item of inventory;
dock the particular MDU (361) with the MIP (351); and
drive the particular MDU (361) to transport the MIP (351) to a station of the warehouse.

37. The computer readable medium of claim 36, wherein the code is further operable to:
provide an availability signal for the particular MDU (361).

38. The computer readable medium of claim 37, wherein the code is further operable to:
calculate movements and process communication messages.

39. The computer readable medium of claim 36, wherein the code is further operable to:
generate position signals by a guidance system of the MDU (361); and
navigate a path to the MIP (351) using the position signals.

40. The computer readable medium of claim 39, wherein the code is further operable to:
navigate a path to a pack station (395) using the position signals generated by the guidance system.

41. The computer readable medium of claim 36, wherein the code is further operable to:
identify a location of the item of inventory within the plurality of MIPs (351) located in the warehouse.

42. The computer readable medium of claim 41, wherein the location is identified within one of a plurality of vertically stackable trays in the MIPs (351), each tray containing one or more items of inventory.

43. The computer readable medium of claim 36, wherein the code is further operable to:
store the plurality of MIPs (351) in a virtual grid (360) on a floor (390) of the warehouse;

44. The computer readable medium of claim 36, wherein the code is further operable to:
receive a radio frequency identification RFID signal from each of the MIPs (351), the RFID signal identifying a unique MIP (351) and the items of inventory contained in each MIP (351).

45. The computer readable medium of claim 36, wherein the code is further operable to:
move the MDU (361) to return the MIP (351) to an available storage location after removal of the item of inventory from the MIP (351);
return the MIP (351) to the available storage location in the warehouse;
undock the MDU (361) from the MIP (351).

46. The computer readable medium of claim 36, wherein the code is further operable to:
move the MDU (361) to a check-in station (460) for inventory replenishment;
return the MIP (351) to an available storage location in the warehouse after inventory replenishment;
undock the MDU (361) from the MIP (351).

47. The computer readable medium of claim 45 or 46, wherein the code is further operable to:
determine an optimum storage location for the MIP (351) in the virtual grid (360).

48. The computer readable medium of claim 36, wherein the code is further operable to:
communicate in a peer-to-peer fashion between each of the MDUs (369) to form queues and to avoid traffic congestion on a factory floor (390).

## Patentansprüche

1. System für eine Lager- bzw. Vorratsverwaltung in einem Warenhaus, umfassend eine oder mehrere mobile Antriebseinheiten MDU (361), wobei jede mobile Antriebseinheit (361) eine mit einem Prozessor gekoppelte Nachrichtenverbindung bzw. ein mit einem Prozessor gekoppeltes Kommunikations-Bindeglied, einen Ankopplungsmechanismus und eine Energieeinheit aufweist, die mit einem Antriebsmechanismus gekoppelt ist, der konfiguriert ist, um die mobile Antriebseinheit (361) auf Steuersignale des Prozessors hin in dem Warenhaus umher zu bewegen,
wobei die mobile Antriebseinheit (361) Befehlssignale über das Kommunikations-Bindeglied empfängt;
einen Computer, der konfiguriert ist, um ein Anforderungssignal zu übertragen, welches einen Auftrag bezüglich eines Lagerpostens spezifiziert;
eine Mehrzahl von bewegbaren Lagermagazinen MIP (351), wobei jedes bewegbare Lagermagazin (351) Lagerposten enthält und für eine Anbringung an dem Ankopplungsmechanismus der mobilen Antriebseinheit (361) gestaltet ist,
wobei die mobile Antriebseinheit (361) an einem bewegbaren Lagermagazin (351) ankoppelt, um das bewegbare Lagermagazin (351) auf die Befehlssignale hin durch das Warenhaus zu transportieren,
**dadurch gekennzeichnet,**
**dass** jede mobile Antriebseinheit (361) einen Speicher enthält, der Positionskoordinaten für die Mehrzahl der bewegbaren Lagermagazine (351) und eine Liste von Lagerposten speichert, die in jedem der bewegbaren Lagermagazine (351) enthalten sind,
wobei jede mobile Antriebseinheit (361) dazu geeignet ist, eine geschätzte Zeitdauer für den Transport eines bewegbaren Lagermagazins (351) zu bestimmen, welches einen in dem Auftrag spezifizierten Posten enthält, und die geschätzte Zeitdauer zu dem Computer zu übertragen,
**dass** der Computer ausgelegt ist, um eine bestimmte mobile Antriebseinheit (361) zur Erfüllung des Auftrags auf der Grundlage einer kürzesten geschätzten Zeitdauer auszuwählen und der bestimmten mobilen Antriebseinheit (361) zu melden, dass sie zur Erfüllung des Auftrags ausgewählt worden ist,
und **dass** die bestimmte mobile Antriebseinheit (361) ausgelegt ist, um zu dem Ort des bewegbaren Lagermagazins (351) zu fahren, welches den bestimmten Lagerposten enthält, an dem bewegbaren Lagermagazin (351) anzukoppeln und das bewegbare Lagermagazin zu einer Station des Warenhauses zu fahren.

2. System nach Anspruch 1, ferner umfassend
ein Transportsystem MHS (400) und eine oder mehrere Packstationen (395),
wobei der Computer sich an einer der Packstationen (395) befindet und wobei der Computer konfiguriert ist, um auf eine von dem Transportsystem (400) abgegebene Auftragsanforderung hin die Befehlssignale zu den mobilen Antriebseinheiten (361) zu übertragen.

3. System nach Anspruch 1, wobei die Steuersignale durch den Prozessor auf Befehlssignale hin erzeugt werden, die über das Kommunikations-Bindeglied empfangen werden.

4. System nach Anspruch 2, wobei die Auftragsanforderung von dem Transportsystem (400) zu dem an einer der Packstationen (395) sich befindenden Computer (450) übertragen wird.

5. System nach Anspruch 1, ferner umfassend
eine oder mehrere Packstationen (395),
ein Transportsystem MHS (400), welches die Befehlssignale zu den mobilen Antriebseinheiten (361) überträgt,
wobei das bewegbare Lagermagazin (351) auf die Befehlssignale hin einer bestimmten Packstation (395) zugeführt wird.

6. System nach Anspruch 2, wobei jede mobile Antriebseinheit (361) die geschätzte Zeitdauer zu dem an der Packstation (395) sich befindenden Computer (450) über ein drahtloses Netzwerk (410) unter Heranziehung eines HF-Systems überträgt, welches
mit dem Kommunikations-Bindeglied der einen oder mehreren mobilen Antriebseinheiten (361) gekoppelt ist.

7. System nach Anspruch 1, wobei jede der mobilen Antriebseinheiten (361) ein Leitsystem enthält, welches Positionssignale für den Prozessor bereitstellt.

8. System nach Anspruch 7, wobei das Leitsystem ein globales Pseudolite-(Pseudo-Satellit)-Innenraum-GPS-(globales Posxtionierungssystem)-System umfasst.

9. System nach Anspruch 8, wobei die eine oder mehreren mobilen Antriebseinheiten (361) unter Heranziehung von durch das GPS-System bereitgestellter Information auf dem Fabrikboden navigiert/navigieren.

10. System nach Anspruch 1, wobei ein oder mehrere bewegbare Lagermagazine (351) als vertikal stapelbare Schalen bzw. Wannen gestaltet sind.

11. System nach Anspruch 10, wobei eine oder mehrere der stapelbaren Schalen bzw. Wannen eine Mehrzahl von Behältern aufweist/aufweisen.

12. System nach Anspruch 1, wobei die Mehrzahl der bewegbaren Lagermagazine in einem virtuellen Gitternetz (360) auf einem Betriebsboden (390) gelagert ist.

13. System nach Anspruch 1 oder 2, wobei jede der mobilen Antriebseinheiten (361) ein globales Positionierungssystem GPS enthält
und wobei jede mobile Antriebseinheit (361) unter Heranziehung von durch das GPS-System bereitgestellter Information in dem Warenhaus autonom fährt bzw, navigiert.

14. System nach Anspruch 1 oder 2, wobei in jedem der bewegbaren Lagermagazine (351) eine Hochfrequenz-Identifikation bzw. -Kennung (RFID) eingebettet ist, um jedes auf einem Betriebsboden (390) sich befindende bewegbare Lagermagazin (351) zu identifizieren.

15. System nach Anspruch 2, wobei die Befehlssignale von dem Transportsystem (400) zu einer oder mehreren Anmeldestationen (460) übertragen werden, die mit dem Transportsystem (400) gekoppelt sind,
wobei die Befehlssignale diejenigen bestimmten Lagerposten bezeichnen, welche eine Ergänzung erfordern.

16. System nach Anspruch 15, wobei ein Anmeldestations-Computer (465) eine der mobilen Antriebseinheiten (361) auswählt, um eines der bewegbaren Lagermagazine (351), welches/ welche zumindest einen leeren Behälter enthält/enthalten, zu einer Anmeldestation (460) zu transportieren, um Lagerposten zu ergänzen.

17. System nach Anspruch 1 oder 2, wobei die eine oder mehreren mobilen Antriebseinheiten (361), die an bewegbare Lagermagazine (351) angekoppelt sind, welche zumindest einen leeren Behälter enthalten, Schlangenbahnen längs der Seiten eines Betriebsbodens (390) bilden, um auf Lagerbestandsergänzungs-Anforderungen von einem oder mehreren Artmeldestations-Computern (465) zu warten.

18. System nach Anspruch 17, wobei die eine oder mehreren mobilen Antriebseinheiten (361) die bewegbaren Lagermagazine (351) zu einer Anmeldestation (460) transportieren, um Lagerposten aufzunehmen.

19. System nach Anspruch 1 oder 2, wobei die Befehlssignale über ein drahtloses Netzwerk (410) zu den mobilen Antriebseinheiten (361) übertragen werden.

20. System nach Anspruch 1 oder 2, ferner umfassend eine Mehrzahl von Anmeldestationen (460),
wobei ein Computer (465) an bzw. in einer Anmeldestation (460) der Mehrzahl der mobilen Antriebseinheiten (361) über ein drahtloses Netzwerk (410) meldet, wenn ein leeres Magazin für eine Ergänzungsaktivität benötigt wird.

21. System nach Anspruch 20, wobei ein Anmeldestations-Computer (465) eine mobile Antriebseinheit (361) für einen Transport eines leeren bewegbaren Lagermagazins zu einer Anmeldestation (460) für eine Ergänzung von Lagerposten auswählt.

22. System nach Anspruch 1 oder 2, wobei jede der mobilen Antriebseinheiten (361) Mittel bzw. eine Einrichtung zur Kommunikation von Informationen mit mobilen Partner-Antriebseinheiten (361) unter Heranziehung eines drahtlosen Netzwerks (410) aufweist,
wobei die Informationen eine Koordinateninformation für jede der mobilen Antriebseinheiten (361) und Lagerposten-Informationen enthalten, die in bestimmten bewegbaren Lagermagazinen gespeichert sind.

23. Verfahren zum Verwalten von Lagerposten in einem Warenhaus, umfassend:
Übertragen eines Anforderungssignals von einem Computer, wobei das Anforderungssignal einen Auftrag bezüglich eines Lagerpostens spezifiziert;
Empfangen des Anforderungssignals durch eine Mehrzahl von mobilen Antriebseinheiten (361), deren jede einen Prozessor enthält, der mit einem RAM-Speicher (Schreib-Lese-Speicher mit wahlfreiem Zugriff) gekoppelt ist,
**dadurch gekennzeichnet,**
**dass** der RAM-Speicher Positionskoordinaten einer Mehrzahl von bewegbaren Lagermagazinen MIP (351) und eine Liste von Lagerposten speichert, die in jedem der bewegbaren Lagermagazine (351) enthalten sind,
wobei die mobile Antriebseinheit (361) auf das Anforderungssignal **dadurch** anspricht,
**dass** ein Ort eines bewegbaren Lagermagazins (351) bestimmt wird, welches den Lagerposten enthält,
**dass** durch jede der mobilen Antriebseinheiten (361) eine geschätzte Zeitdauer für den Transport eines bewegbaren Lagermagazins (351) bestimmt wird, das den in dem Auftrag spezifizierten Posten enthält,
und **dass** von jeder der mobilen Antriebseinheiten (361) die geschätzte Zeitdauer zu dem Computer übertragen wird,
**dass** durch den Computer eine bestimmte mobile Antriebseinheit (361) zur Erfüllung des Auftrags auf der Grundlage der kürzesten geschätzten Zeitdauer ausgewählt wird,
**dass** der bestimmten mobilen Antriebseinheit (361) gemeldet wird, dass sie zur Erfüllung des Auftrags ausgewählt worden ist,
**dass** die bestimmte mobile Antriebseinheit (361) zu dem Ort bzw. der Stelle des bewegbaren Lagermagazins (351) gefahren wird, welches den Lagerposten enthält, dass die bestimmte mobile Antriebseinheit (361) an dem bewegbaren Lagermagazin (351) angekoppelt wird
und **dass** die bestimmte mobile Antriebseinheit (361) für einen Transport des bewegbaren Lagermagazins (351) zu einer Station des Warenhauses gefahren wird.

24. Verfahren nach Anspruch 23, wobei die Station eine Packstation (395) umfasst.

25. Verfahren nach Anspruch 23, wobei der Prozessor dazu herangezogen wird, Bewegungen zu berechnen und Kommunikationsnachrichten zu verarbeiten.

26. Verfahren nach Anspruch 23, ferner umfassend
ein Speichern der Mehrzahl der bewegbaren Lagermagazine (351) in einem virtuellen Gitternetz (360) auf einem Boden (390) des Warenhauses;
ein Einbetten eines Hochfrequenz-Identifizierungschips in jedem der bewegbaren Lagermagazine (351),
wobei der Hochfrequenz-Identifizierungschip ein eindeutiges bewegbares Lagermagazin (351) und die Lagerposten identifiziert, die in jedem bewegbaren Lagermagazin (351) enthalten sind.

27. Verfahren nach Anspruch 23, wobei die Station eine Packstation aus einer Mehrzahl von Packstationen (395) umfasst.

28. Verfahren nach Anspruch 23, wobei die bewegbaren Lagermagazine (351) als vertikal stapelbare Schalen bzw. Wannen gestaltet sind, deren jede einen oder mehrere Lagerposten enthält.

29. Verfahren nach Anspruch 28, wobei jede Schale bzw. Wanne in Behälter unterteilt sein kann.

30. Verfahren nach Anspruch 23, ferner umfassend ein Erzeugen von Positionssignalen durch ein Leitsystem der mobilen Antriebseinheit (361) und ein Navigieren unter Heranziehung der Positionssignale auf einem Pfad zu dem bewegbaren Lagermagazin (351).

31. Verfahren nach Anspruch 30, ferner umfassend ein Navigieren auf einem Pfad zu der Station unter Heranziehung der durch das Leitsystem erzeugten Positionssignale.

32. Verfahren nach Anspruch 23, ferner umfassend
ein Entnehmen des Lagerpostens aus dem bewegbaren Lagermagazin (351) an der Station,
ein Bewegen der mobilen Antriebseinheit (361) zum Zurückführen des bewegbaren Lagermagazins (351) zu einer verfügbaren Lagerstelle;
ein Zurückführen des bewegbaren Lagermagazins (351) zu einer verfügbaren Lagerstelle in dem Warenhaus
und ein Abkoppeln der mobilen Antriebseinheit (361) von dem bewegbaren Lagermagazin (351).

33. Verfahren nach Anspruch 23, ferner umfassend
ein Bewegen der mobilen Antriebseinheit (361) zu einer Anmeldestation (460),
ein Ergänzen von Lagerposten in dem bewegbaren Lagermagazin (351) an der Anmeldestation (460),
ein Zurückführen des bewegbaren Lagermagazins (351) zu einer verfügbaren Lagerstelle in dem Warenhaus
und ein Abkoppeln der mobilen Antriebseinheit (361) von dem bewegbaren Lagermagazin (351).

34. Verfahren nach Anspruch 23, ferner umfassend ein Kommunizieren von Informationen zwischen mobilen Nachbar-Antriebseinheiten (361) unter Heranziehung eines drahtlosen Netzwerks (410).

35. Verfahren nach Anspruch 34, wobei die Informationen eine Koordinateninformation für jede der mobilen Antriebseinheiten (361) und eine Information über Lagerposten enthalten, die in bestimmten bewegbaren Lagermagazinen (351) gelagert sind.

36. Mittels eines Computers lesbares Medium, welches einen Code zum Verwalten von Lagerposten in einem Warenhaus enthält, wobei der Code betreibbar ist,
um ein Anforderungssignal von einem Computer, welches einen Auftrag bezüglich eines Lagerpostens spezifiziert, in einer bestimmten Antriebseinheit aus einer Mehrzahl von mobilen Antriebseinheiten (361) zu empfangen, die sich in dem Warenhaus befinden, wobei die bestimmte mobile Antriebseinheit (361) einen Prozessor enthält, der mit einem RAM-Speicher (Schreib-Lese-Speicher mit wahlfreiem Zugriff) gekoppelt ist,
**dadurch gekennzeichnet,**
**dass** der RAM-Speicher Positionskoordinaten einer Mehrzahl von bewegbaren Lagermagazinen (351) und eine Liste von Lagerposten speichert, die in jedem der bewegbaren Lagermagazine (351) enthalten sind,
**dass** der Code ferner betreibbar ist,
um eine geschätzte Zeitdauer für den Transport eines bewegbaren Lagermagazins (351) zu bestimmen, der einen in dem Auftrag spezifizierten Posten enthält,
um die geschätzte Zeitdauer zu dem Computer zu übertragen,
um eine Meldung darüber zu empfangen, dass eine bestimmte mobile Antriebseinheit (361) von einem Computer ausgewählt worden ist,
um zu bestimmen, dass die bestimmte mobile Antriebseinheit (361) zur Erfüllung des Auftrags ausgewählt ist,
um die bestimmte mobile Antriebseinheit (361) zu dem Ort bzw. der Stelle des bewegbaren Lagermagazins (351) zu fahren, das den Lagerposten enthält,
um die bestimmte mobile Antriebseinheit (361) mit dem bewegbaren Lagermagazin (351) zu koppeln
und um die bestimmte mobile Antriebseinheit (361) für einen Transport des bewegbaren Lagermagazins (351) zu einer Station des Warenhauses zu fahren.

37. Mittels eines Computers lesbares Medium nach Anspruch 36, wobei der Code ferner betreibbar ist, um ein Verfügbarkeitssignal für die bestimmte mobile Antriebseinheit (361) bereitzustellen.

38. Mittels eines Computers lesbares Medium nach Anspruch 37, wobei der Code ferner betreibbar ist, um Bewegungen zu berechnen und um Kommunikationsnachrichten zu verarbeiten.

39. Mittels eines Computers lesbares Medium nach Anspruch 36, wobei der Code ferner betreibbar ist, um Positionssignale durch ein Leitsystem der mobilen Antriebseinheit (361) zu erzeugen und um unter Heranziehung der Positionssignale auf einem Pfad zu dem bewegbaren Lagermagazin (351) zu fahren bzw. navigieren.

40. Mittels eines Computers lesbares Medium nach Anspruch 39, wobei der Code ferner betreibbar ist, um unter Heranziehung der durch das Leitsystem erzeugten Positionssignale auf einem Pfad zu einer Packstation (395) zu fahren bzw. navigieren.

41. Mittels eines Computers lesbares Medium nach Anspruch 36, wobei der Code ferner betreibbar ist, um einen Ort bzw. Platz des Lagerpostens innerhalb der Mehrzahl von in dem Warenhaus sich befindenden bewegbaren Lagermagazinen (351) zu identifizieren.

42. Mittels eines Computers lesbares Medium nach Anspruch 41, wobei der Ort bzw. Platz innerhalb einer Schale bzw. Wanne aus einer Mehrzahl von vertikal stapelbaren Schalen bzw. Wannen in den bewegbaren Lagermagazinen (351) identifiziert wird, wobei jede Schale bzw. Wanne einen oder mehrere Lagerposten enthält.

43. Mittels eines Computers lesbares Medium nach Anspruch 36, wobei der Code ferner betreibbar ist, um die Mehrzahl der bewegbaren Lagermagazine (351) in einem virtuellen Gitternetz (360) auf einem Boden (390) des Warenhauses zu lagern.

44. Mittels eines Computers lesbares Medium nach Anspruch 36, wobei der Code ferner betreibbar ist, um ein Hochfrequenz-Identifikationssignal (RFID) von jedem der bewegbaren Lagermagazine (351) zu empfangen,
wobei das Hochfrequenz-Identiftkationssignal (RFID) ein eindeutiges bewegbares Lagermagazin (351) und die in jedem bewegbaren Lagermagazin (351) enthaltenen Lagerposten identifiziert.

45. Mittels eines Computers lesbares Medium nach Anspruch 36, wobei der Code ferner betreibbar ist, um die mobile Antriebseinheit (361) für eine Zurückführung des bewegbaren Lagermagazins (351) zu einer verfügbaren Lagerstelle nach Entnahme des Lagerpostens aus dem bewegbaren Lagermagazin (351) zu bewegen,
um das bewegbare Lagermagazin (351) zu der verfügbaren Lagerstelle in dem Warenhaus zurückzuführen
und um die mobile Antriebseinheit (361) von dem bewegbaren Lagermagazin (351) abzukoppeln.

46. Mittels eines Computers lesbares Medium nach Anspruch 36, wobei der Code ferner betreibbar ist, um die mobile Antriebseinheit (361) zu einer Anmeldestation (460) für eine Lagerbestandsergänzung zu bewegen,
um das bewegbare Lagermagazin (351) zu einer verfügbaren Lagerstelle in dem Warenhaus nach der Lagerbestandsergänzung zurückzuführen und um die mobile Antriebseinheit (361) von dem bewegbaren Lagermagazin (351) abzukoppeln.

47. Mittels eines Computers lesbares Medium nach Anspruch 45 oder 46, wobei der Code ferner betreibbar ist, um eine optimale Lagerstelle für das bewegbare Lagermagazin (351) in dem virtuellen Gitternetz (360) zu bestimmen.

48. Mittels eines Computers lesbares Medium nach Anspruch 36, wobei der Code ferner betreibbar ist, um in einer Punkt-zu-Punkt-Weise zwischen jeder der mobilen Antriebseinheiten (361) für die Bildung von Schlangen und zur Vermeidung eines Verkehrsstaus auf einem Betriebsboden (390) zu kommunizieren.

## Revendications

1. Système de gestion des inventaires dans un entrepôt, comprenant :
une ou plusieurs unités d'entraînement mobiles MDU (361), chaque MDU (361) ayant une liaison de communication couplée à un processeur, un mécanisme d'amarrage, et une unité d'alimentation couplée à un mécanisme d'entraînement configuré pour déplacer la MDU (361) au niveau de l'entrepôt en réponse à des signaux de commande du processeur, la MDU (361) recevant les signaux de commande via la liaison de communication ;
un ordinateur configuré pour transmettre un signal de demande, le signal de demande spécifiant une commande d'un article d'inventaire ;
une pluralité de plateaux d'inventaire mobiles MIP (351), chaque MIP (351) contenant des articles d'inventaire et étant configuré pour être fixé au mécanisme d'amarrage de la MDU (361), la MDU (361) s'amarrant à un MIP (351) pour transporter le MIP (351) à travers l'entrepôt en réponse aux signaux de commande,
**caractérisé en ce que :**
chaque MDU (361) comprend une mémoire stockant des coordonnées de position pour la pluralité de MIP (351) et une liste d'articles d'inventaire contenus dans chacun des plateaux d'inventaire mobiles MIP (351),
dans lequel chaque unité d'entraînement mobile MDU (361) est conçue pour déterminer une durée estimée pour transporter un plateau d'inventaire mobile MIP (351) contenant un article spécifié dans la commande ; et transmettre la durée estimée à l'ordinateur ; et
l'ordinateur est conçu pour choisir une MDU (361) particulière pour remplir la commande sur la base d'une durée estimée la plus courte et notifier la MDU (361) particulière qui a été choisie pour remplir la commande ;
la MDU particulière (361) étant conçue pour se diriger vers l'emplacement du MIP (351) qui contient l'article d'inventaire particulier ; s'amarrer au MIP (351) et entraîner le MIP vers un poste de l'entrepôt.

2. Système selon la revendication 1, comprenant en outre :
un système de manipulation de matériaux MHS (400) ; et
un ou plusieurs postes d'emballage (395), dans lequel l'ordinateur se trouve au niveau d'un des postes d'emballage (395), l'ordinateur étant configuré pour transmettre les signaux de commande aux MDU (361) en réponse à une demande de commande émise par le MHS (400).

3. Système selon la revendication 1, dans lequel les signaux de commande sont générés par le processeur en réponse aux signaux de commande reçus via la liaison de communication.

4. Système selon la revendication 2, dans lequel la demande de commande est transmise du MHS (400) à l'ordinateur (450) se trouvant au niveau d'un des postes d'emballage (395).

5. Système selon la revendication 1, comprenant en outre :
un ou plusieurs postes d'emballage (395) ;
un système de manipulation de matériaux MHS (400) qui transmet les signaux de commande aux MDU (361), et
dans lequel le MIP (351) est fourni à un poste d'emballage particulier (395) en réponse aux signaux de commande.

6. Système selon la revendication 2, dans lequel chaque MDU (361) transmet la durée estimée à l'ordinateur (450) se trouvant au niveau du poste d'emballage (395) via un réseau sans fil (410) en utilisant un système RF couplé à la liaison de communication du ou des MDU (361).

7. Système selon la revendication 1, dans lequel chacune des MDU (361) contient un système de guidage qui fournit des signaux de position au processeur.

8. Système selon la revendication 7, dans lequel le système de guidage comprend un système de localisation GPS intérieur pseudolite.

9. système selon la revendication 8, dans lequel le ou les MDU (361) se déplacent sur le plancher de l'usine (390) en utilisant les informations fournies par le GPS.

10. Système selon la revendication 1, dans lequel un ou plusieurs MIP (351) sont configurés comme des plateaux empilables verticalement.

11. Système selon la revendication 10, dans lequel un ou plusieurs des plateaux empilables comprend(comprennent) une pluralité de cases.

12. Système selon la revendication 1, dans lequel la pluralité de plateaux d'inventaire mobiles sont stockés dans une grille virtuelle (360) sur un plancher d'usine (390).

13. Système selon la revendication 1 ou 2, dans lequel chacune des MDU (361) contient un système de localisation GPS, chaque MDU (361) se déplaçant dans l'entrepôt de façon autonome en utilisant les informations fournies par le GPS.

14. Système selon la revendication 1 ou 2, dans lequel une identification radiofréquence RFID est intégrée dans chacun des MIP (351) pour identifier chaque MIP (351) se trouvant sur un plancher d'usine (390).

15. Système selon la revendication 2, dans lequel les signaux de commande sont transmis à partir du MHS (400) à un ou plusieurs postes de contrôle (460) couplés au MRS (400), les signaux de commande indiquant que des articles d'inventaire particuliers doivent faire l'objet d'un réapprovisionnement.

16. Système selon la revendication 15, dans lequel un ordinateur du poste de contrôle (465) choisit une des MDU (361) pour transporter un des MIP (351) contenant au moins une case vide vers un poste de contrôle (460) pour la remplir d'articles d'inventaire.

17. Système selon la revendication 1 ou 2, dans lequel une ou plusieurs MDU (361) amarrée(s) aux MIP (351) contenant au moins une case vide forment des files d'attente sur les côtés d'un plancher d'usine (390) pour attendre les demandes de réapprovisionnement d'inventaire d'un ou plusieurs postes de réapprovisionnement (465).

18. Système selon la revendication 17, dans lequel le ou les MDU (361) transportent les MIP (351) vers un poste de contrôle (460) pour recevoir les articles d'inventaire.

19. Système selon la revendication 1 ou 2, dans lequel les signaux de commande sont transmis aux MDU (361) via un réseau sans fil (410).

20. Système selon la revendication 1 ou 2, comprenant en outre:
une pluralité de postes de contrôle (460), un ordinateur (465) au niveau d'un poste de contrôle (460) informant la pluralité de MDU (361) via un réseau sans fil (410) lorsqu'un plateau vide est nécessaire pour une activité de réapprovisionnement.

21. Système selon la revendication 20, dans lequel un ordinateur de poste de contrôle (465) choisit une MDU (361) pour transporter un plateau d'inventaire mobile vide vers un poste de contrôle (460) pour le remplir d'articles d'inventaire.

22. Système selon la revendication 1 ou 2, dans lequel chacune des MDU (361) comprend des moyens pour communiquer des informations à des MDU homologues (361) en utilisant un réseau sans fil (410), les informations comprenant des informations de coordonnées pour chacune des MDU (361) et des informations sur les articles d'inventaire stockés dans les plateaux d'inventaire particuliers.

23. Procédé de gestion d'articles d'inventaire dans un entrepôt comprenant :
l'émission d'un signal de demande à partir d'un ordinateur, le signal de demande spécifiant une commande d'un article d'inventaire ;
la réception du signal de demande par une pluralité d'unités d'entraînement mobiles MDU (361), chacune des MDU (361) comprenant un processeur couplé à une mémoire vive RAM,
**caractérisé en ce que :**
la mémoire vive RAM stocke les coordonnées de position d'une pluralité de plateaux d'inventaire mobiles MIP (351) et une liste d'articles d'inventaire contenus dans chacun des MIP (351), la MDU (361) répondant au signal de demande :
en déterminant un emplacement d'un plateau d'inventaire mobile MIP (351) qui contient l'article d'inventaire ;
en déterminant au moyen de chacune des MDU (361) une durée estimée pour transporter un MIP (351) contenant l'article spécifié dans la commande ; et en transmettant au moyen de chacune des MDU (361) la durée estimée à l'ordinateur ;
en sélectionnant au moyen de l'ordinateur une MDU particulière (361) pour remplir la commande sur la base de la durée estimée la plus courte ; en informant la MDU particulière (361) qu'elle a été choisie pour remplir la commande ;
en entraînant la MDU particulière (361) à l'emplacement du MIP (351) qui contient l'article d'inventaire ;
en amarrant la MDU particulière (361) au MIP (351) ;
en entraînant la MDU particulière (361) pour transporter le MIP (351) vers un poste de l'entrepôt.

24. Procédé selon la revendication 23, dans lequel le poste comprend un poste d'emballage (395).

25. Procédé selon la revendication 23, dans lequel le processeur est utilisé pour calculer les mouvements et traiter les messages de communication.

26. Procédé selon la revendication 23, comprenant en outre :
le stockage de la pluralité de MIP (351) dans une grille virtuelle (360) sur un plancher (390) de l'entrepôt ;
l'intégration d'une puce d'identification radiofréquence RFID dans chacun des MIP (351), la puce RFID identifiant un seul MIP (351) et les articles d'inventaire contenus dans chaque MIP (351).

27. Procédé selon la revendication 23, dans lequel le poste comprend un d'une pluralité de postes d'emballage (395).

28. Procédé selon la revendication 23, dans lequel les MIP (351) sont configurés comme des plateaux empilables verticalement, chaque plateau contenant un ou plusieurs articles d'inventaire.

29. Procédé selon la revendication 28, dans lequel chaque plateau peut être subdivisé en cases.

30. Procédé selon la revendication 23, comprenant en outre :
la génération de signaux de position par un système de guidage de la MDU (361) ; et le déplacement le long d'un trajet vers le MIP (351) en utilisant les signaux de position.

31. Procédé selon la revendication 30, comprenant en outre :
le déplacement le long d'un trajet jusqu'au poste en utilisant les signaux de position générés par le système de guidage.

32. Procédé selon la revendication 23, comprenant en outre :
le retrait de l'article d'inventaire du MIP (351) au niveau du poste ;
le déplacement de la MDU (361) pour retourner le MIP (351) à un emplacement de stockage approprié ;
le retour du MIP (351) à un emplacement de stockage approprié dans l'entrepôt ;
le désamarrage de la MDU (361) du MIP (351).

33. Procédé selon la revendication 23, comprenant en outre :
le déplacement de la MDU (361) vers un poste de contrôle (460) ;
le remplissage en articles d'inventaire du MIP (351) au niveau du poste de contrôle (460) ;
le retour du MIP (351) à un emplacement de stockage approprié dans l'entrepôt ;
le désamarrage de la MDU (361) du MIP (351).

34. Procédé selon la revendication 23, comprenant en outre la communication des informations entre les MDU homologues (361) en utilisant un réseau sans fil (410).

35. Procédé selon la revendication 34, dans lequel les informations comprennent des informations de coordonnées pour chacune des MDU (361) et des informations sur les articles d'inventaire stockés dans les MIP (351) particuliers.

36. Support lisible par ordinateur comprenant un code de gestion d'articles d'inventaire dans un entrepôt, le code étant utilisable pour :
recevoir un signal de demande d'un ordinateur spécifiant une commande d'un article d'inventaire au niveau d'une unité d'une pluralité d'unités d'entraînement mobiles MDU (361) se trouvant dans l'entrepôt, la MDU particulière (361) comprenant un processeur couplé à une mémoire vive RAM
**caractérisé en ce que :**
la mémoire vive RAM qui stocke les coordonnées de position d'une pluralité de plateaux d'inventaire mobiles MIP (351) et une liste d'articles d'inventaire contenus dans chacun des MIP (351) ;
le code étant en outre utilisable pour :
déterminer une durée estimée pour transporter un plateau d'inventaire mobile MIP (351) contenant un article spécifié dans la commande ;
transmettre à l'ordinateur la durée estimée ;
recevoir une notification qu'une MDU particulière (361) a été choisie à partir d'un ordinateur ;
déterminer que la MDU particulière (361) est choisie pour remplir la commande ;
entraîner la MDU (361) particulière vers l'emplacement du MIP (351) qui contient l'article d'inventaire ;
amarrer la MDU (361) particulière au MIP (351) ; et
entraîner la MDU (361) particulière pour transporter le MIP (351) vers un poste de l'entrepôt.

37. Support lisible par ordinateur selon la revendication 36, dans lequel le code est en outre utilisable pour : fournir un signal de disponibilité pour la MDU (361) particulière.

38. Support lisible par ordinateur selon la revendication 37, dans lequel le code est en outre utilisable pour : calculer les mouvements et traiter les messages de communication.

39. Support lisible par ordinateur selon la revendication 36, dans lequel le code est en outre utilisable pour :
générer des signaux de position au moyen d'un système de guidage de la MDU (361), et
se déplacer sur un trajet vers le MIP (351) en utilisant les signaux de position.

40. Support lisible par ordinateur selon la revendication 39, dans lequel le code est en outre utilisable pour :
se déplacer sur un trajet vers un poste d'emballage (395) en utilisant les signaux de position générés par le système de guidage.

41. Support lisible par ordinateur selon la revendication 36, dans lequel le code est en outre utilisable pour :
identifier un emplacement de l'article d'inventaire à l'intérieur de la pluralité de MIP (351) se trouvant dans l'entrepôt.

42. Support lisible par ordinateur selon la revendication 41, dans lequel l'emplacement est identifié à l'intérieur d'un d'une pluralité de plateaux empilables verticalement dans les MIP (351), chaque plateau contenant un ou plusieurs articles d'inventaire.

43. Support lisible par ordinateur selon la revendication 36, dans lequel le code est en outre utilisable pour :
stocker la pluralité de MIP (351) dans une grille virtuelle (360) sur un plancher (390) de l'entrepôt.

44. Support lisible par ordinateur selon la revendication 36, dans lequel le code est en outre utilisable pour :
recevoir un signal d'identification radiofréquence RFID de chacun des MIP (351), le signal RFID identifiant un seul MIP (351) et les articles d'inventaire contenus dans chaque MIP (351).

45. Support lisible par ordinateur selon la revendication 36, dans lequel le code est en outre utilisable pour :
déplacer la MDU (361) pour retourner le MIP (351) à un emplacement de stockage disponible après retrait de l'article d'inventaire du MIP (351) ;
retourner le MIP (351) à l'emplacement de stockage disponible dans l'entrepôt ;
désamarrer la MDU (361) du MIP (351).

46. Support lisible par ordinateur selon la revendication 36, dans lequel le code est en outre utilisable pour :
déplacer la MDU (361) vers un poste de contrôle (460) pour réapprovisionnement de l'inventaire ;
retourner le MIP (351) à un emplacement de stockage disponible dans l'entrepôt après réapprovisionnement de l'inventaire ;
désamarrer la MDU (361) du MIP (351).

47. Support lisible par ordinateur selon la revendication 45 ou 46, dans lequel le code est en outre utilisable pour :
déterminer un emplacement de stockage optimum pour le MIP (351) dans la grille virtuelle (360).

48. Support lisible par ordinateur selon la revendication 36, dans lequel le code est en outre utilisable pour :
communiquer selon un mode poste à poste entre chacune des MDU (361) pour former des files et pour éviter une congestion de trafic sur un plancher d'usine (390).
